(19)

Europäisches Patentamt

European Patent Office

Office européen des brevets

(11) **EP 3 337 273 A1**

(12) **EUROPEAN PATENT APPLICATION**
published in accordance with Art. 153(4) EPC

(43) Date of publication:
**20.06.2018 Bulletin 2018/25**

(51) Int Cl.:
**H04W 74/08** (2009.01)    **H04W 72/04** (2009.01)

(21) Application number: **16835211.0**

(22) Date of filing: **10.08.2016**

(86) International application number:
**PCT/JP2016/073593**

(87) International publication number:
**WO 2017/026514 (16.02.2017 Gazette 2017/07)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA MD**

(30) Priority: **13.08.2015   JP 2015159946**

(71) Applicant: **NTT DOCOMO, INC.**
**Chiyoda-ku**
**Tokyo 100-6150 (JP)**

(72) Inventors:
• **TAKEDA, Kazuaki**
**Tokyo 100-6150 (JP)**

• **JIANG, Huiling**
**Beijing 100190 (CN)**
• **LIU, Liu**
**Beijing 100190 (CN)**
• **MU, Qin**
**Beijing 100190 (CN)**
• **LIAO, Zhen**
**Beijing 100876 (CN)**
• **LI, Yong**
**Beijing 100876 (CN)**
• **WANG, Wenbo**
**Beijing 100876 (CN)**

(74) Representative: **Hoffmann Eitle**
**Patent- und Rechtsanwälte PartmbB**
**Arabellastraße 30**
**81925 München (DE)**

(54) **USER TERMINAL, WIRELESS BASE STATION, WIRELESS COMMUNICATION METHOD, AND WIRELESS COMMUNICATION SYSTEM**

(57)    In order that in communication of a user terminal with a usage band limited to a narrow band that is a part of a system band, communication can be properly performed even in a case of applying repetition transmission, a user terminal according to one aspect of the present invention is a user terminal with a usage band limited to a narrow band that is a part of a system band, and includes a transmission section that repeatedly transmits a PRACH (Physical Random Access Channel); a reception section that repeatedly receives a downlink control channel for RAR (Random Access Response) corresponding to the PRACH; and a control section that controls reception of the downlink control channel for RAR and/or transmission of the PRACH, based on a system frame number (SFN) about the PRACH and a repetition number of the PRACH.

FIG. 4

EP 3 337 273 A1

## Description

Technical Field

The present invention relates to a user terminal, a radio base station, a radio communication method and a radio communication system in the next-generation mobile communication system.

Background Art

In UMTS (Universal Mobile Telecommunications System) networks, for the purpose of higher data rates, low delay and the like, Long Term Evolution (LTE) has been specified (Non-Patent Literature 1). Further, for the purpose of wider bands and higher speed than LTE, a successor system (called, for example, LTE-A (LTE-Advanced), FRA (Future Radio Access) or 5G (5th generation mobile communication system)) to LTE has also been studied.

In addition, in recent years, technological development of machine-to-machine communication (M2M: Machine-to-Machine) has been actively conducted in which as the costs of communication devices are lowered, devices connected to a network communicate with each other without human intervention so as to perform automatic control. In particular, a 3GPP (Third Generation Partnership Project) is promoting standardization on the optimization of MTC (Machine Type Communication) as a cellular system for machine-to-machine communication also in M2M (Non-Patent Literature 2). Considered are use of MTC terminals (MTC UE (User Equipment)) in a wide range of fields such as electric meters, gas meters, vending machines, vehicles and other industrial devices.

Citation List

Non-Patent Literature

[Non-Patent Literature 1] 3GPP TS 36.300 "Evolved Universal Terrestrial Radio Access (E-UTRA) and Evolved Universal Terrestrial Radio Access Network (E-UTRAN); Overall description; Stage 2"

[Non-Patent Literature 2] 3GPP TS 36.888 "Study on provision of low-cost Machine-Type Communications (MTC) User Equipments (UEs) based on LTE (Release 12)"

Summary of Invention

Technical Problem

In terms of cost reduction and the improvement of a coverage area in a cellular system, among MTC terminals, there is an increasing demand for a low-cost MTC terminal (LC (Low-Cost) - MTC UE) which can be realized with a simple hardware configuration. The low-cost MTC terminal is realized by limiting bands used on uplink (UL) and downlink (DL) to a Narrow Band (NB) which is part of a system band. The system band corresponds to, for example, an existing LTE band (such as 20 MHz), a component carrier (CC) or the like.

Furthermore, in the MTC terminals, the application of coverage enhancement is being studied. Specifically, as a method of coverage enhancement, the application of repetition transmission can be considered which increases a reception signal-to-interference noise ratio (SINR: Signal-to-Interference plus Noise Ratio) by repeatedly transmitting the same signal on downlink (DL) and/or uplink (UL) over a plurality of sub-frames.

However, when the repetition transmission is simply used, reduction in frequency utilization efficiency, reduction in throughput or the like is caused, and there is the risk that appropriate communication cannot be performed.

The present invention was made in view of such a respect, and it is an object of the invention to provide a user terminal, a radio base station, a radio communication method and a radio communication system in which in communication of a user terminal with a usage band limited to a narrow band that is a part of a system band, communication can be properly performed even in a case of applying repetition transmission.

Solution to Problem

A user terminal according to one aspect of the present invention is a user terminal with a usage band limited to a narrow band that is a part of a system band, and includes a transmission section that repeatedly transmits a PRACH (Physical Random Access Channel); a reception section that repeatedly receives a downlink control channel for RAR (Random Access Response) corresponding to the PRACH; and a control section that controls reception of the downlink control channel for RAR and/or transmission of the PRACH, based on a system frame number (SFN) about the PRACH and a repetition number of the PRACH.

Advantageous Effects of Invention

According to the present invention, in communication of a user terminal with a usage band limited to a narrow band that is a part of a system band, communication can be properly performed even in a case of applying repetition transmission.

Brief Description of Drawings

FIG. 1 is a diagram showing an example of allocation of a narrow band within a system band;
FIG. 2 is a conceptual diagram of radio resources in a random access procedure of UE to which coverage enhancement is set;
FIG. 3 is a conceptual diagram of radio resources in a random access procedure when a plurality of UEs exists to which coverage enhancement is set;
FIG. 4 is a diagram showing an example of radio resources of a CSS assigned based on a method 1 of a first embodiment;
FIG. 5 is a diagram showing an example of radio resources of a CSS assigned based on a method 2 of the first embodiment;
FIG. 6 is a diagram showing an example of radio resources of a CSS assigned based on a method 3 of the first embodiment;
FIG. 7 is a diagram showing an example of a correspondence relationship between PRACH resources and CE levels according to a method 1 of a second embodiment;
FIG. 8 is a diagram showing an example of PRACH transmission based on the correspondence relationship of FIG. 7;
FIG. 9 is a diagram showing an example of a correspondence relationship between PRACH resources and CE levels according to a method 2 of the second embodiment;
FIG. 10 is a diagram showing an example of PRACH transmission based on the correspondence relationship of FIG. 9;
FIG. 11 is a diagram showing an example of a correspondence relationship between PRACH resources and CE levels according to a method 3 of the second embodiment;
FIG. 12 is a diagram showing an example of PRACH transmission based on the correspondence relationship of FIG. 11;
FIG. 13 is a schematic configuration diagram of a radio communication system according to an embodiment of the present invention;
FIG. 14 is a diagram showing an example of the entire configuration of a radio base station according to the embodiment of the present invention;
FIG. 15 is a diagram showing an example of the function configuration of the radio base station according to the embodiment of the present invention;
FIG. 16 is a diagram showing an example of the entire configuration of a user terminal according to the embodiment of the present invention; and
FIG. 17 is a diagram showing an example of the function configuration of the user terminal according to the embodiment of the present invention.

Description of Embodiments

In low-cost MTC terminals, it has been studied to simplify a hardware configuration by allowing a reduction in processing capacity. For example, in the low-cost MTC terminal, it has been studied to apply a reduction in peak rate, limitation of a transport block size, limitation of a resource block (which is also referred to as a RB (Resource Block) or a PRB (Physical Resource Block), limitation of a reception RF and the like as compared with an existing user terminal (LTE terminal),.

The low-cost MTC terminal may be simply referred to as an MTC terminal. Further, the existing user terminal may be referred to as a normal UE, a non-MTC UE or the like.

Unlike the existing user terminal with the upper limit of the usage band set to a system band (for example, 20 MHz (100 RBs), 1 component carrier or the like), the upper limit of the usage band in the MTC terminal is limited to a predetermined narrow band (for example, 1.4 MHz (6 RBs)). It has been studied to operate the MTC terminal with a limited band within a system band of LTE/LTE-A in consideration of a relationship with the existing user terminal.

For example, in the system band of LTE/LTE-A, frequency multiplexing is supported between the MTC terminal with a limited band and the existing user terminal with an unlimited band. Hence, the MTC terminal may be expressed as a terminal in which the maximum band supported is a narrow band that is a part of a system band or may be referred to as a terminal which has the transmission/reception performance of a band narrower than the system band of LTE/LTE-A.

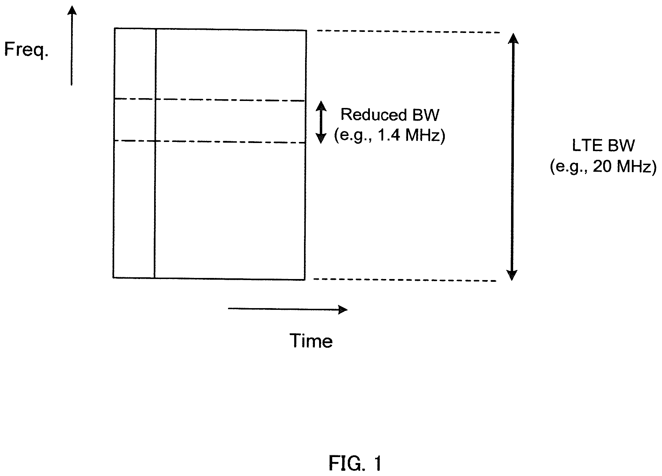

FIG. 1 is a diagram showing an example of allocation of a narrow band within a system band. In FIG. 1, as compared with a system band of LTE (for example, 20 MHz), a predetermined narrow band (for example, 1.4 MHz) is set to a part of the system band. The narrow band corresponds to a frequency band which can be detected by the MTC terminal.

Note that the frequency location of the narrow band which becomes the usage band of the MTC terminal can preferably be varied within the system band. For example, the MTC terminal preferably performs communication using a different frequency resource for each predetermined period (for example, a sub-frame). By this means, traffic off-load for the MTC terminal and a frequency diversity effect can be realized, and thus it is possible to suppress a reduction in frequency utilization efficiency. Hence, the MTC terminal preferably has the function of retuning RF in consideration of the application of frequency hopping and frequency scheduling.

Note that a narrow band (DL NB: Downlink Narrow Band) used for transmission and reception on downlink and a narrow band (UL NB: Uplink Narrow Band) used for transmission and reception on uplink may use different frequency bands. Further, the DL NB may be referred to as a downlink narrow band, and UL NB may be referred to as an uplink narrow band.

The MTC terminal uses a downlink control channel allocated in a narrow band so as to receive downlink control information (DCI: Downlink Control Information), and the downlink control channel may be referred to as an EPDCCH (Enhanced Physical Downlink Control Channel) or may be referred to as an MPDCCH (MTC PDCCH).

Further, the MTC terminal uses a downlink common channel (downlink data channel) allocated in a narrow band so as to receive downlink data, and the downlink common channel may be referred to as a PDSCH (Physical Downlink Shared Channel) or may be referred to as an MPDSCH (MTC PDSCH).

Furthermore, an uplink control channel (for example, a PUCCH (Physical Uplink Control Channel)) for the MTC terminal and an uplink shared channel (for example, a PUSCH (Physical Uplink Shared Channel)) may be referred to as an MPUCCH (MTC PUCCH), an MPUSCH (MTC PUSCH), and the like, respectively. In addition to the channels described above, channels which are utilized by the MTC terminal may be represented by adding "M" indicating MTC to conventional channels which are used in the same applications.

Moreover, an SIB (System Information Block) for the MTC terminal may be specified, and the SIB may be referred to as an MTC-SIB.

In addition, it has been studied to apply coverage enhancement (CE) to the radio communication of the MTC terminal. For example, in the MTC terminal, studied is the coverage enhancement of 15 dB at the maximum, as compared with the existing user terminal.

It can be considered to apply a method (repetition) of repeatedly transmitting the same signal (transport block) on downlink (DL) and/or uplink (UL), as a coverage enhancement method in the radio communication of the MTC terminal. It is assumed that the number of times repetition transmission is performed (repetition number) is increased in order to achieve a desired coverage property (for example, the coverage of 15 dB at the maximum), depending on a communication environment.

Signals repeatedly transmitted are combined on the reception side, and are used for reception processing (for example, demapping, demodulation and decoding). This makes it possible to enhance the quality of the reception signal. Note that the reception of the signal which is repeatedly transmitted is also referred to as repetition reception.

The radio base station can notify the MTC terminal of information on the repetition number of an uplink signal (for example, the PUSCH) and/or a downlink signal (for example, the PDSCH) by any one or a combination of broadcast information (MIB (Master Information Block)), system information (SIB), higher layer signaling (for example, RRC signaling) and downlink control information (DCI: Downlink Control Information).

Further, the repetition number of each signal may be specified by a repetition level. Here, the repetition level refers to information on the repetition number, and may be, for example, the repetition number itself or predetermined information (for example, an index) associated with the repetition number. The radio base station can notify the MTC terminal of information on a correspondence relationship between the repetition level and the repetition number by the utilization of the higher layer signaling (for example, the RRC signaling or the broadcast information), the downlink control information (DCI) or a combination thereof.

Note that these correspondence relationships may be common to all cells or may be specified specific to a cell. Further, information on the correspondence relationships may be previously set for the radio base station and the user terminal.

It can be considered to expand a random access channel (PRACH: Physical Random Access Channel) used for initial connection for the coverage enhancement. For example, the repetition levels of the PRACH and the radio resources (or the radio resource sets) of the PRACH may be specified so as to make one-to-one correspondence.

Preferably, for the UE with the coverage enhancement set, an additional time/frequency resource region is separately provided. In the region, at least CDM (Code Division Multiplexing) can be applied to a signal. The CDM can be realized by the utilization of a different sequence generated from a predetermined preamble sequence for each signal.

In order to indicate the setting of the coverage enhancement, a coverage enhancement level (CE level) may be specified. For example, it is configured such that when the CE levels are different, the repetition numbers are different. Although it is considered to set the number of CE levels to be, for example, three, the number is not limited to three. It may be configured such that the UE to which the coverage enhancement is not applied (the repetition transmission is not performed) corresponds to no CE level (or CE level 0) whereas the UE to which the coverage enhancement is applied corresponds to CE level 1-3.

Preferably, as a scheme for multiplexing the PRACH for a plurality of UEs, the CDM and/or TDM (Time Division Multiplexing) and/or FDM (Frequency Division Multiplexing) are supported.

The random access procedure of the UE with the coverage enhancement set is, for example, performed as follows. The UE first determines the CE level of the PRACH. The determination can be made based on received power (for example, RSRP (Reference Signal Received Power)) which is measured by the UE, received quality (for example, RSRQ. (Reference Signal Received Quality)), a channel state and the like. Then, the UE uses the determined CE level to repeatedly transmit the PRACH.

When an eNB receives the PRACH from the UE, the eNB uses the MPDCCH to transmit downlink control information (DCI) for random access response (RAR) at a predetermined CE level to the UE. The CE level of the MPDCCH may be different from the CE level of the PRACH.

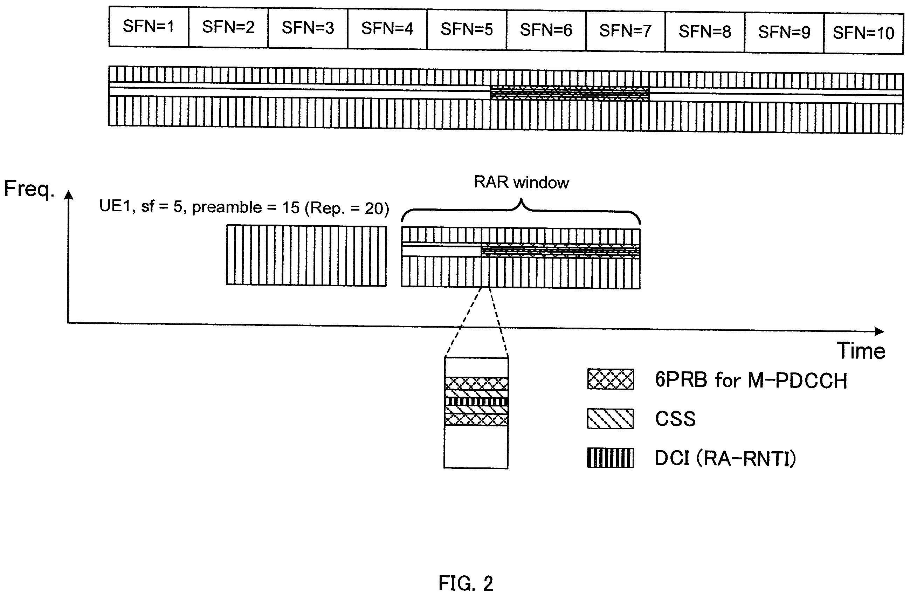

FIG. 2 is a conceptual diagram of radio resources in the random access procedure of the UE with the coverage enhancement set. In FIG. 2, the radio resources corresponding to system frame numbers (SFNs) 1-10 are shown.

In FIG. 2, a UE1 determines to transmit the PRACH under conditions of SFN = 2, sf (sub-frame number) = 5, preamble number = 15 and repetition number = 20, and repeatedly transmits the PRACH. Note that, although the PRACH may be transmitted by 6 PRBs or hopping may be applied thereto, the transmission method is not limited thereto.

When the repetition transmission of the PRACH is completed, the UE1 attempts to receive DCI for RAR on the PRACH (DCI used for resource identification for the reception of the RAR or DCI including the RAR) for a predetermined period. The period for attempting reception of the DCI for RAR may be referred to as a RAR window. When in the RAR window, an MPDCCH for RAR is not successfully received, the UE1 may transmit the PRACH again.

On the other hand, the eNB which has identified the PRACH from the UE1 transmits the DCI for RAR to the UE1 at predetermined timing. It has been studied that the DCI for RAR on the MTC terminal is transmitted with a common search space (CSS) for the MTC terminal. The CSS is formed with one or more PRBs in, for example, a predetermined narrow band. Note that the CSS for the MTC terminal may be referred to as an eCSS (enhanced CSS), an MTC-CSS or the like.

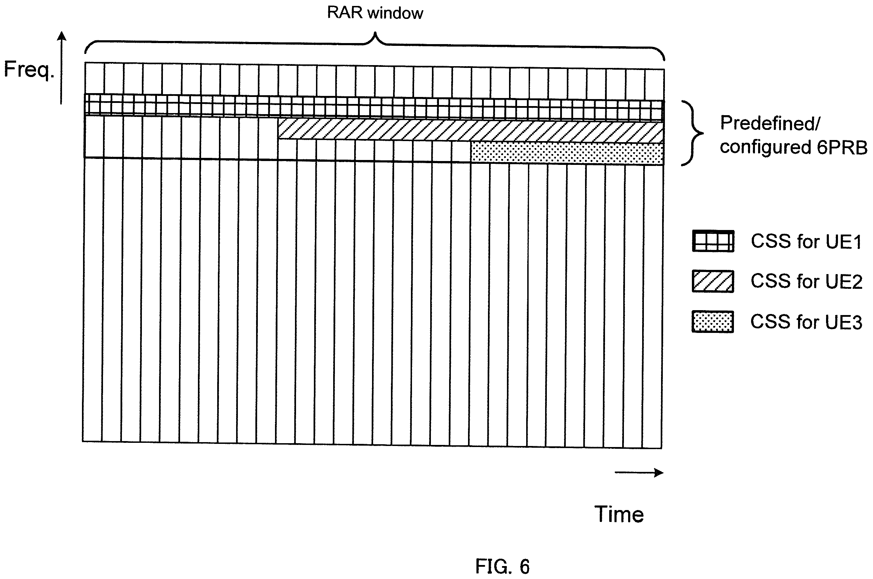

In FIG. 2, 6 PRBs for the MPDCCH are shown for each SFN, and the DCI for RAR is notified from SFN = 5 by the repetition number = 20 in a part of the region of the CSS contained within the 6 PRBs. The DCI is scrambled with an identifier (RA-RNTI: Random Access Radio Network Temporary Identifier) corresponding to the PRACH transmitted by the UE1. The RA-RNTI is calculated based on the transmission start sub-frame of the PRACH and the frequency resource (frequency location) of the PRACH.

When the UE has received (blind-decoded), within the RAR window, the DCI for RAR by use of the RA-RNTI corresponding to the transmitted PRACH, the UE continues the random access procedure. For example, the UE receives the RAR by a downlink resource (PDSCH) specified by the DCI for RAR, and transmits a message 3 (Msg. 3) by use of an uplink resource indicated by the RAR. Note that the RAR may be notified by the PDSCH specified by the DCI for MPDCCH or may be notified by use of only the MPDCCH.

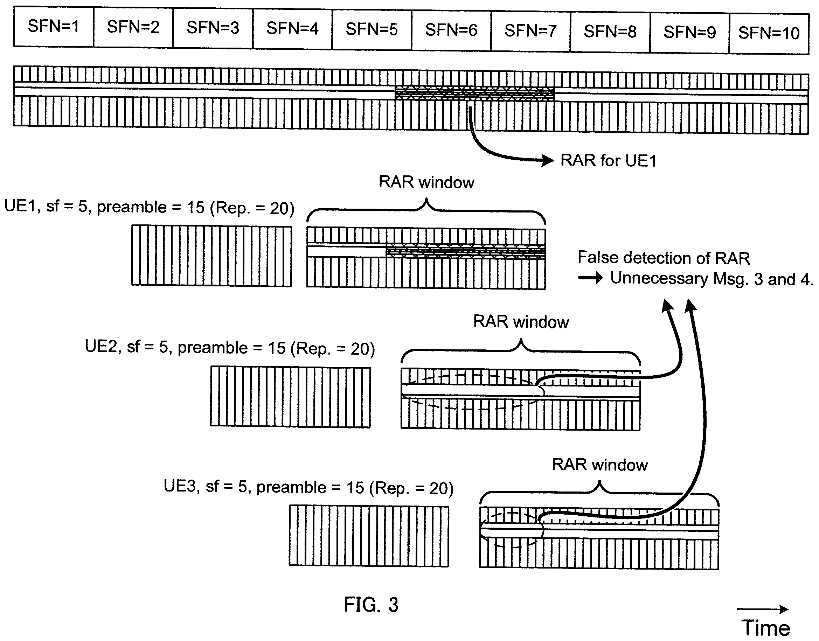

However, when as in FIG. 2, a repetition signal is utilized to perform the random access procedure, the DCI for RAR may be erroneously detected. A specific description will be given with reference to FIG. 3.

FIG. 3 is a conceptual diagram of radio resources in a random access procedure when a plurality of UEs with the coverage enhancement set is present. FIG. 3 shows an example where unlike FIG. 2, three UEs (UEs 1-3) attempt to transmit the PRACH and to receive the DCI for RAR.

In FIG. 3, the UEs 1-3 each adopt conditions of sf (sub-frame number) = 5, preamble number = 15 and repetition number = 20, and start to transmit the PRACH with different SFNs (SFN 2-4), respectively. The eNB identifies the PRACH of the UE1, acquires an uplink resource for the UE1 and transmits the DCI for RAR for specifying the uplink resource.

However, in the example of FIG. 3, the RAR windows of the UEs 1-3 overlap each other. Since the transmission start sub-frame number of the PRACH and the preamble are equal to each other in the UEs 1-3, not only the UE1 but also the UEs 2 and 3 detect the DCI for RAR corresponding to the transmitted PRACH. With this detection, the UEs 2 and 3 interpret the DCI for RAR for the UE1 as the DCI for RAR for the own terminals, and transmit the message 3 by the uplink resource, and the transmissions interfere with each other, and therefore there is a risk that the eNB cannot receive the message 3. Further, it can be considered that the eNB having received the message 3 unnecessarily transmits a message 4.

As described above, in a case where the repetition transmission is applied to the PRACH or the MPDCCH and the DCI for RAR is assigned to the CSS, there is a problem of erroneously detecting the MPDCCH (the DCI for RAR) even when a plurality of UEs starts to transmit the PRACH with different SFNs. Further, even when the plurality of UEs starts to transmit the PRACH with the same SFN, the same problem occurs if different repetition numbers are applied. In this case, it can be considered that unnecessary retransmission is performed, and thus the frequency utilization efficiency on uplink is deteriorated.

Hence, the present inventors have conceived to make different from each other the radio resources to which the DCIs for RAR are assigned, among a plurality of UEs by utilizing information on time associated with transmission of the PRACH. Specifically, the present inventors have found a new CSS (MPDCCH) configuration for the DCI for RAR. The present inventors have also found to make different from each other the radio resources (time/frequency/code resource) of the PRACH for each SFN.

Embodiments of the present invention will be described below. Although here the MTC terminal is illustrated as the user terminal with the usage band used limited to a narrow band, the application of the present invention is not limited to the MTC terminal. In addition, although the description will be given with the assumption that the narrow band is 6 PRBs (1.4 MHz), even in another narrow band, the present invention can be applied based on the Description. Note that the determination of radio resources for receiving/transmitting a predetermined signal may be translated into the determination of resources (or schemes) such as a frequency, a time, a code and a space utilized for receiving/transmitting the predetermined signal. Here, the reception/transmission may include reception processing (for example, demapping, demodulation and decoding) / transmission processing (for example, mapping, modulation and coding).

(Radio communication method)

<First embodiment

A first embodiment of the present invention provides a new CSS assignment method. Specifically, in the first embodiment, the radio resources (frequency/code resources) of the CSS to which the DCI for RAR can be assigned are determined (shifted) based on UE-specific information (for example, the SFN about the PRACH and the repetition number of the PRACH). In the first embodiment, the SFN about the PRACH may be any one of the SFN at which the transmission of the PRACH is started, the SFN at which the transmission of the PRACH is completed and the SFN at which the RAR window is started or a combination thereof. The CSS of the present embodiment may be referred to as, for example, RAR-SS (search space for RAR).

Note that, in the first embodiment, as in a conventional method, each UE is assumed to use the same preamble and sub-frame number (transmission start sub-frame number), in the PRACH transmission of continuous SFNs. However, the application of the first embodiment is not limited to this environment.

<A method 1 of the first embodiment>

In a method 1 of the first embodiment, the frequency resource (6 PRBs) to which the CSS is assigned is determined based on time. Specifically, the frequency resource of the CSS to which the DCI for RAR can be assigned is shifted based on the SFN about the PRACH and the repetition number of the PRACH.

For example, the location $I_{PRB}$ (for example, specified by the minimum PRB index) of the radio resources to which the CSS is assigned may be determined by Formula 1 below.
[Math 1]

(Formula 1)

$$I_{PRB} = I'_{PRB} + \left(SFN \bmod \left(\lceil R / N_{SF} \rceil\right)\right) * 6$$

where $I'_{PRB}$ is the initial location of the radio resources (6 PRBs) which are used for detection of the MPDCCH, may be previously specified or may be set by the higher layer signaling (for example, the broadcast information (MIB, MTC-SIB) or the RRC signaling) or the like. $N_{SF}$ is the number of sub-frames (TTI: Transmission Time Interval) included in one radio frame, for example, 10. Further, R is the repetition level of the PRACH.

Note that the initial location of the 6 PRBs for the MPDCCH may be associated with any one of, for example, a physical cell ID (PCID: Physical Cell Identity), a virtual cell ID (VCID: Virtual Cell Identity) and a user terminal ID (UEID: User Equipment (-specific) Identity) or a combination thereof or may be set by a broadcast signal (for example, MTC-SIB). Further, the initial location may be used as an initial location for the assignment of a paging signal. Note that the initial location may be used in common for both the paging signal and the DCI for RAR or may be used only for the DCI for RAR (different initial locations may be used for the paging signal and the DCI for RAR).

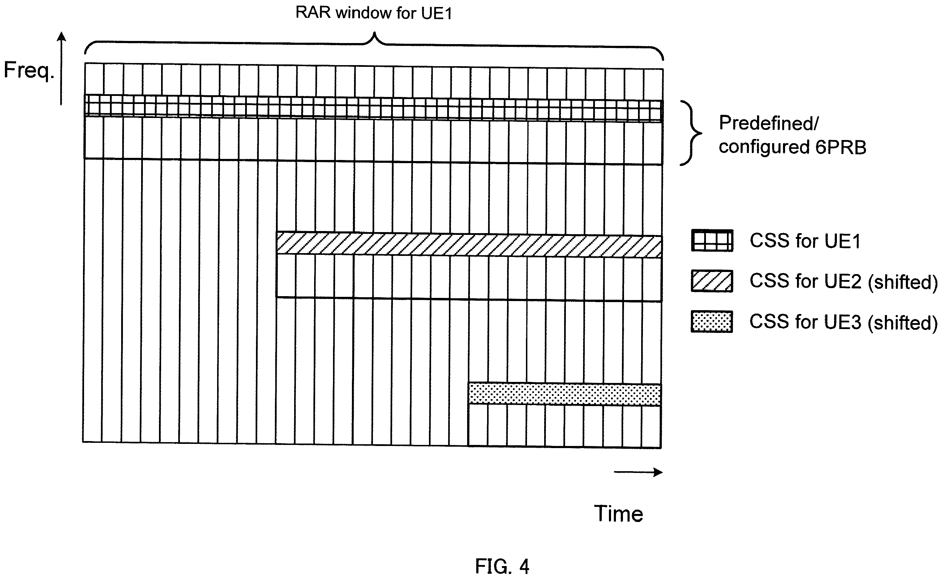

FIG. 4 is a diagram showing an example of the radio resources of the CSS assigned based on the method 1 of the first embodiment. In FIG. 4, the CSSs are shown in which the DCIs for RAR of the UEs 1-3 are allocated as a result of the transmission of the PRACH by the UEs 1-3 under the same conditions as in FIG. 3. The parameters (such as the repetition number) of the PRACH are assumed to be same as in the example of FIG. 3.

In the case of FIG. 4, the repetition number of the PRACH is the same but the SFNs are different among the UEs 1-3, and therefore it is possible to shift the frequency location of the CSS. For example, as in Formula 1, the PRB index is shifted in multiples of 6 for each SFN, and thus the CSSs of respective UEs can be allocated so as not to overlap each other.

<A method 2 of the first embodiment

In a method 2 of the first embodiment, the code resource of the DCI for RAR transmitted with the CSS is determined based on time. Specifically, the identifier (RA-RNTI) of the DCI for RAR transmitted with the CSS is determined based on the SFN about the PRACH and the repetition number of the PRACH.

For example, the identifier (RA-RNTI) of the DCI for RAR transmitted with the CSS may be determined by Formula 2 below.

[Math 2]

$$\text{(Formula 2)}$$

$$RA - RNTI = RA - RNTI' + \left(SFN \bmod \left(\lceil R / N_{SF} \rceil\right)\right)$$

where *RA-RNTI'* is the initial value of the RA-RNTI, may be previously specified or may be set by the higher layer signaling (for example, the RRC signaling) or the like.

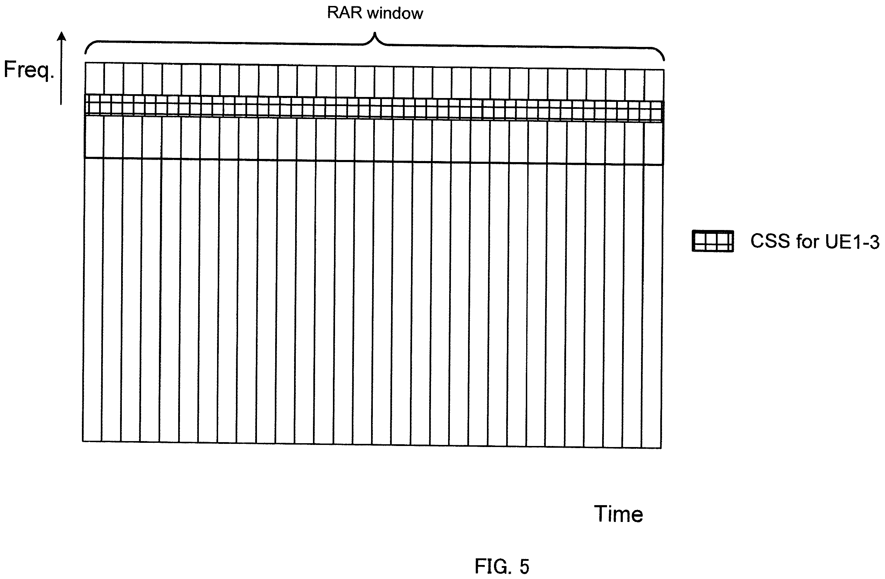

FIG. 5 is a diagram showing an example of the radio resources of the CSS assigned based on the method 2 of the first embodiment. In FIG. 5, the CSSs are shown in which the DCIs for RAR of the UEs 1-3 are allocated as a result of the transmission of the PRACH by the UEs 1-3 under the same conditions as in FIG. 4.

In the case of FIG. 5, the repetition number of the PRACH is the same but the SFNs are different among the UEs 1-3, and therefore it is possible to make the RN-RNTIs different from each other. As a result, each UE can appropriately descramble the DCI for RAR for the own terminal.

<A method 3 of the first embodiment>

In a method 3 of the first embodiment, an enhanced control channel element (ECCE) which forms the CSS is determined based on time. Specifically, in a hash function for randomizing the CSS, the ECCE is determined based on the SFN about the PRACH and the repetition number of the PRACH.

For example, the ECCE which corresponds to the MPDCCH candidate m of the search space may be determined by Formula 3 below.

[Math 3]

$$\text{(Formula 3)}$$

$$L\left\{\left(Y' + m\right) \bmod \lfloor N_{ECCE} / L \rfloor\right\} + i$$

$$\text{(Formula 4)}$$

$$Y' = SFN \bmod \left(\lceil R / N_{SF} \rceil\right)$$

where L is an aggregation level (for example, 1, 2, 4, 8, 16 and 32) which indicates the number of ECCEs forming the search space, and $N_{ECCE}$ is the number of ECCEs included in the PRB set of the EPDCCH (MPDCCH).

FIG. 6 is a diagram showing an example of the radio resources of the CSS assigned based on the method 3 of the first embodiment. In FIG. 6, the CSSs are shown in which the DCIs for RAR of the UEs 1-3 are allocated as a result of the transmission of the PRACH by the UEs 1-3 under the same conditions as in FIG. 4.

In the case of FIG. 6, the repetition number of the PRACH is the same but the SFNs are different among the UEs 1-3, and therefore it is possible to make the RN-RNTIs different from each other. As a result, each UE can appropriately descramble the DCI for RAR for the own terminal.

As described above, according to the first embodiment, since it is possible to determine the different radio resources of the CSS to which the DCI for RAR is assigned, based on the UE-specific information which differs for each UE, it is possible to reduce the erroneous detection of the MPDCCH.

Note that, in the first embodiment, as the UE-specific information, the CE level may be used. For example, it is possible to determine the repetition number from the CE level.

<Second embodiment>

In a second embodiment of the present invention, the radio resources (time/frequency/code resource) of the PRACH are made to differ from each other. for each SFN

Note that, in the second embodiment, in a predetermined narrow band (for example, 6 PRBs), the frequency location which is utilized as the CSS of MPDCCH is assumed to be constant. In other words, although the center frequencies of the narrow band differ from each other, the relative location of the CSS within the narrow band is constant. Further, the method of determining the RA-RNTI and the CSS is assumed to be the same as the conventional method. However, the application of the second embodiment is not limited to this environment.

<A method 1 of the second embodiment>

In a method 1 of the second embodiment, the time resources of the PRACH are made to differ from each other in continuous SFNs. Specifically, the sf (sub-frame number) at which the transmission of the PRACH is started is determined based on the SFN about the PRACH (for example, the SFN at which the transmission of the PRACH is started) and the repetition number of the PRACH (and/or the CE level).

A correspondence relationship between a PRACH resource (resource set) and the UE of a predetermined CE level can be established, for example, in the following procedure. Preferably, the time resources (for example, the sub-frame numbers 0 - 9) are divided into parts (groups) corresponding to at least the number of CE levels according to predetermined rules, and the respective CE levels are assigned to the different groups for each SFN. Note that the number of groups is preferably specified to be an integer which is equal to or more than a value obtained by dividing the maximum repetition number of the PRACH that is set by the number of sub-frames (TTI) included in one radio frame.

Note that the predetermined rules in the method 1 may be, for example, a rule in which for the UE where a predetermined repetition number is set, the same sub-frame number is not used during the period of the repetition number. Specifically, the following rules (1) - (3) may be made:

(1) For the UE of the CE level 1 (for example, repetition number = 30), during continuous three radio frames (SFNs), the same sub-frame number (sf) is not used,
(2) For the UE of the CE level 2 (for example, repetition number = 20), during continuous two radio frames (SFNs), the same sub-frame number (sf) is not used, and
(3) For the UE of the CE level 3 (for example, repetition number = 10), during continuous one radio frame (SFN), the same sub-frame number (sf) is not used.

Note that the predetermined rules are not limited to the rules described above.

In the method 1 of the second embodiment, the preamble number of each PRACH may be an arbitrary number. For example, the preamble number may be set to any one of 0 to 63 regardless of the SFN and the sub-frame number.

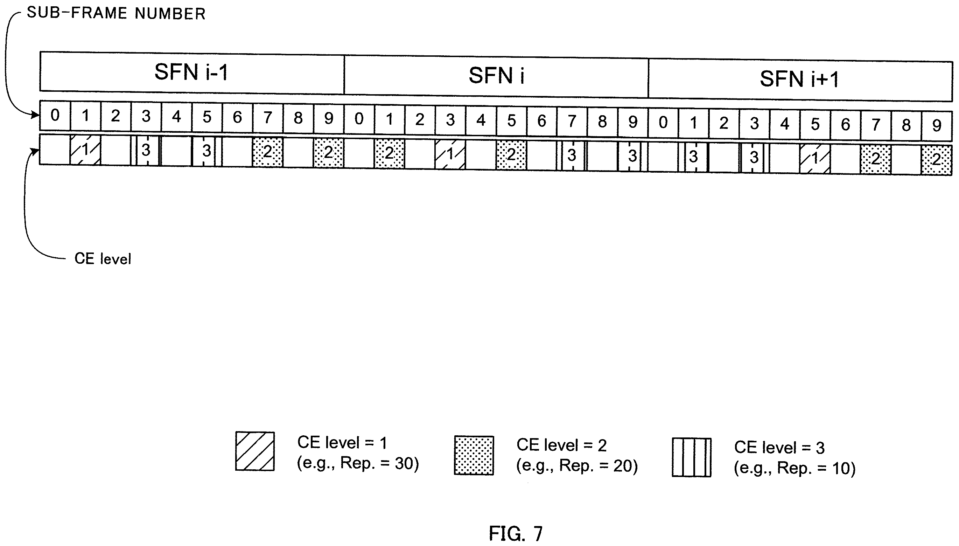

FIG. 7 is a diagram showing an example of a correspondence relationship between the PRACH resources and the CE levels according to the method 1 of the second embodiment. In FIG. 7, in continuous three radio frames (SFNs $i - 1, i, i + 1$), the sub-frame numbers (sf) corresponding to the UEs of the CE levels 1 - 3 are shown. In FIG. 7, the time resources are divided into three groups, based on the rules (1) - (3) described above.

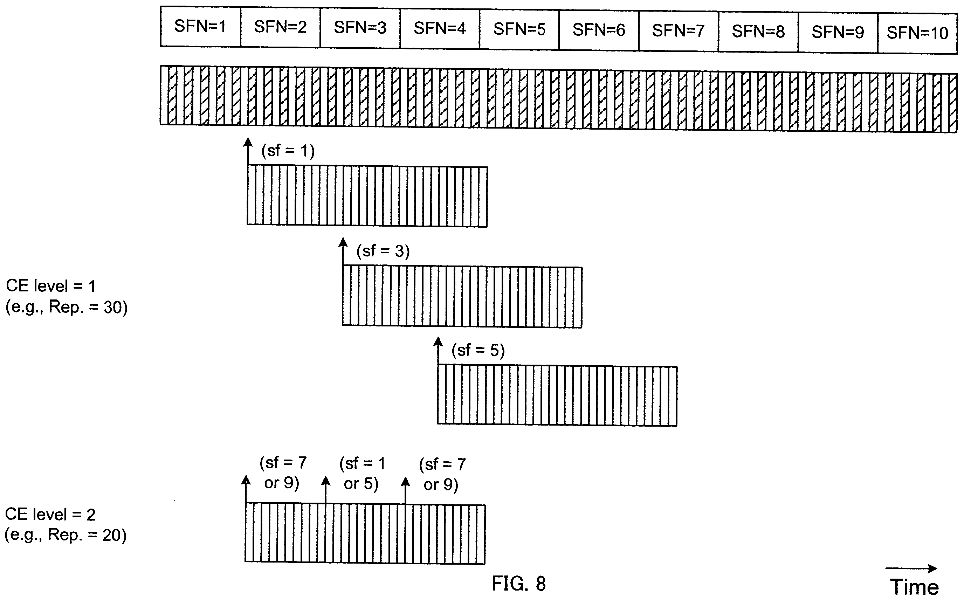

FIG. 8 is a diagram showing an example of the PRACH transmission based on the correspondence relationship of FIG. 7. In FIG. 8, the UE of the CE level 1 can start to transmit the PRACH at sf = 1 in SFN $i - 1$, at sf = 3 in SFN $i$ and sf = 5 in SFN $i + 1$.

Further, the UE of the CE level 2 can start to transmit the PRACH at sf = 7 or 9 in SFN $i - 1$, at sf = 1 or 5 in SFN $i$ and sf = 7 or 9 in SFN $i + 1$. In the second embodiment, as described above, a plurality of sub-frame numbers at which the transmission of the PRACH can be started may be set in one system frame.

Furthermore, the UE of the CE level 3 can start to transmit the PRACH at sf = 3 or 5 in SFN $i - 1$, at sf = 7 or 9 in SFN $i$ and sf = 1 or 3 in SFN $i + 1$.

As described above, in the method 1 of the second embodiment, it is possible to use the different transmission start sub-frames of the PRACH for the different SFNs even in a case where a plurality of UEs of the same CE level uses the same preamble number to transmit the PRACH. Hence, the RA-RNTIs of the DCI for RAR corresponding to the PRACHs transmitted at each SFN are different from each other, and thus it is possible to suppress the erroneous detection.

<A method 2 of the second embodiment>

In a method 2 of the second embodiment, the code resources of the PRACH are made to differ from each other in continuous SFNs. Specifically, the preamble number of the PRACH is determined based on the SFN about the PRACH (for example, the SFN at which the transmission of the PRACH is started) and the repetition number of the PRACH (and/or the CE level).

A correspondence relationship between the PRACH resource (resource set) and the UE of a predetermined CE level can be established, for example, in the following procedure. Preferably, the code resources (for example, the preamble numbers 0 to 63) are divided into parts (groups) corresponding to at least the number of CE levels according to predetermined rules, and the respective CE levels are assigned to the different groups for each SFN. Note that the number of groups is preferably specified to be an integer which is equal to or more than a value obtained by dividing the maximum repetition number of the PRACH that is set by the number of sub-frames (TTI) included in one radio frame.

Further, in the method 2, the groups of the preamble described above are shifted to different CE levels for each SFN.

In the method 2 of the second embodiment, the transmission start sub-frame number (sf) of each PRACH may be an arbitrary number. For example, the sub-frame number may be set to any one of 0 to 9 regardless of the SFN and the preamble number.

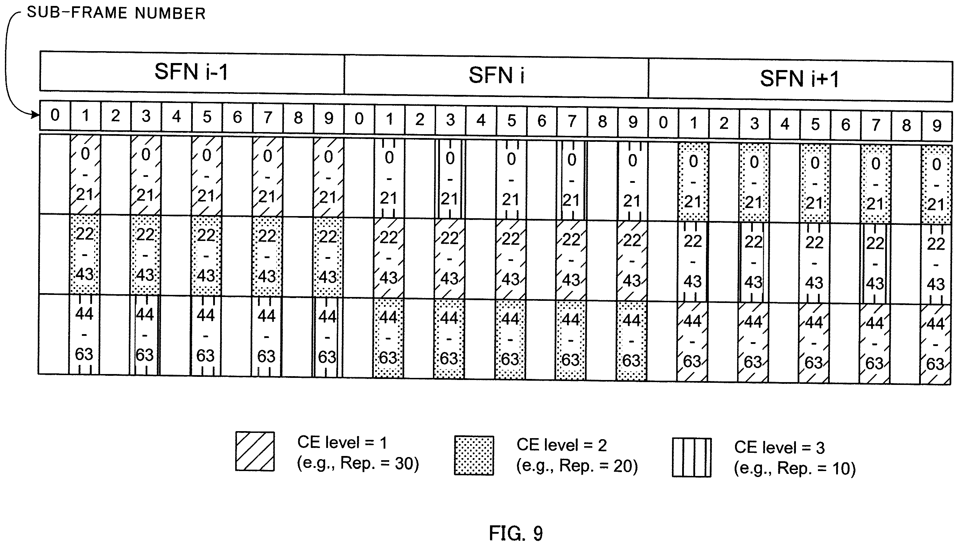

FIG. 9 is a diagram showing an example of a correspondence relationship between the PRACH resources and the CE levels according to the method 2 of the second embodiment. In FIG. 9, in continuous three radio frames (SFNs i - 1, i, i + 1), the preamble numbers associated with the UEs of the CE levels 1 to 3 are shown. In FIG. 9, the code resources are divided into three groups, based on the maximum repetition number (= 30) of the PRACH.

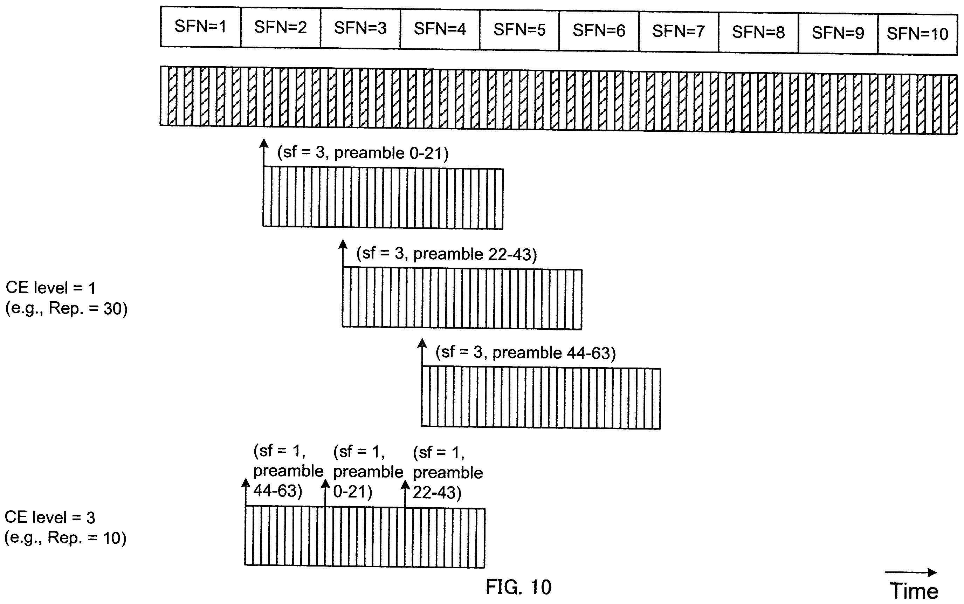

FIG. 10 is a diagram showing an example of the PRACH transmission based on the correspondence relationship of FIG. 9. In FIG. 10, the UE of the CE level 1 can transmit the PRACH at the preamble number = 0 to 21 in SFN i - 1, at the preamble number = 22 to 43 in SFN i and at the preamble number = 44 to 63 in SFN i + 1. Further, in FIG. 10, the UE of the CE level 1 starts to transmit the PRACH at sf = 3.

Furthermore, the UE of the CE level 2 can transmit the PRACH at the preamble number = 22 to 43 in SFN i - 1, at the preamble number = 44 to 63 in SFN i and at the preamble number = 0 to 21 in SFN i + 1.

Moreover, the UE of the CE level 3 can transmit the PRACH at the preamble number = 44 to 63 in SFN i - 1, at the preamble number = 0 to 21 in SFN i and at the preamble number = 22 to 43 in SFN i + 1. Further, in FIG. 10, the UE of the CE level 3 starts to transmit the PRACH at sf = 1.

As described above, in the method 2 of the second embodiment, it is possible to use the different preamble numbers of the PRACH for the different SFNs even in a case where a plurality of UEs of the same CE level transmits the PRACH at the same start sub-frame.

Hence, for example, when the preamble number of the PRACH and the frequency location for the RAR corresponding to the PRACH are associated with each other, the frequency resources (frequency locations) of the DCI for RAR corresponding to the PRACHs transmitted at each SFN are different from each other, and thus it is possible to suppress the erroneous detection.

<A method 3 of the second embodiment>

In a method 3 of the second embodiment, the frequency resources of the PRACH are made to differ from each other in continuous SFNs. Specifically, the frequency location (FL) to which the PRACH is assigned is determined based on the SFN about the PRACH (for example, the SFN at which the transmission of the PRACH is started) and the repetition number of the PRACH (and/or the CE level).

A correspondence relationship between the PRACH resource (resource set) and the UE of a predetermined CE level can be established, for example, in the following procedure. Preferably, the frequency resources (for example, FLs 1 to 3) are divided into parts (groups) corresponding to at least the number of CE levels according to predetermined rules, and the respective CE levels are assigned to the different groups for each SFN. Note that, the number of groups is preferably specified to be an integer which is equal to or more than a value obtained by dividing the maximum repetition number of the PRACH that is set by the number of sub-frames (TTI) included in one radio frame.

Further, in the method 2, the groups of the frequency location described above are shifted to different CE levels for each SFN. Note that the FLs correspond to different narrow bands, respectively.

In the method 3 of the second embodiment, the preamble number of each PRACH and/or the transmission start sub-frame number (sf) may be an arbitrary number.

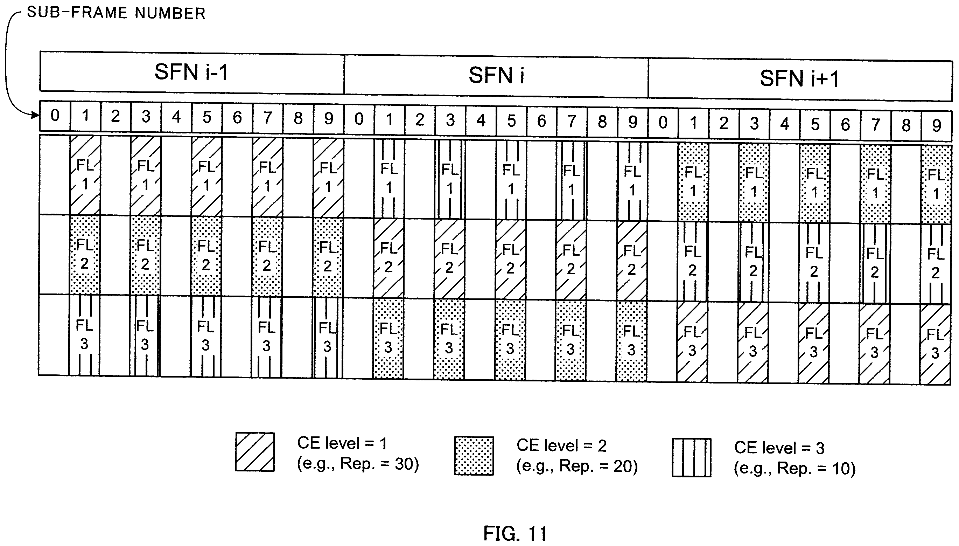

FIG. 11 is a diagram showing an example of a correspondence relationship between the PRACH resources and the CE levels according to the method 3 of the second embodiment. In FIG. 11, in continuous three radio frames (SFNs i - 1, i, i + 1), the frequency locations (FLs) associated with the UEs of the CE levels 1 to 3 are shown. In FIG. 11, the frequency resources are divided into three groups based on the maximum repetition number (= 30) of the PRACH.

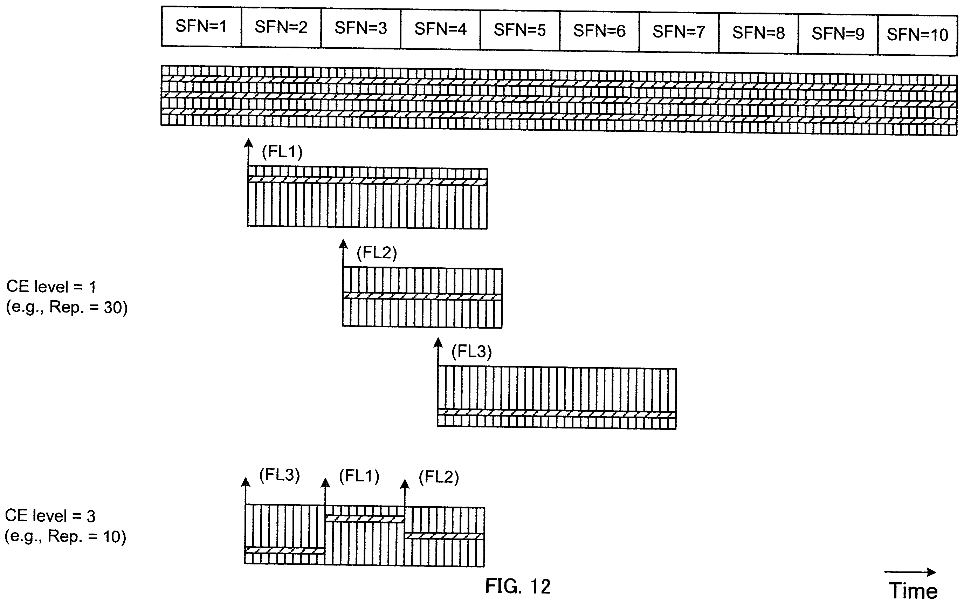

FIG. 12 is a diagram showing an example of the PRACH transmission based on the correspondence relationship of FIG. 11. In FIG. 12, the UE of the CE level 1 can transmit the PRACH at the FL1 in SFN i - 1, at the FL2 in SFN i and at the FL3 in SFN i + 1.

Furthermore, the UE of the CE level 2 can transmit the PRACH at the FL2 in SFN i - 1, at the FL3 in SFN i and at the FL1 in SFN i + 1.

Moreover, the UE of the CE level 3 can transmit the PRACH at the FL3 in SFN i - 1, at the FL1 in SFN i and at the FL2 in SFN i + 1.

As described above, in the method 3 of the second embodiment, it is possible to use the different frequency locations of the PRACH for the different SFNs even in a case where a plurality of UEs of the same CE level uses the same start sub-frame to transmit the PRACH. Hence, the RA-RNTIs of the DCI for RAR corresponding to the PRACHs transmitted at each SFN are different from each other, and thus it is possible to suppress the erroneous detection.

Note that, although in the embodiments discussed above, the example where the sub-frame numbers at which the transmission of the PRACH can be started are odd sub-frames is described, there is no limitation to this example. For example, the sub-frame numbers at which the transmission of the PRACH can be started may be even sub-frame numbers or may be associated with different sub-frames for each SFN.

Further, in the second embodiment, the UE may receive the information on the correspondence relationship between the PRACH resource and the UE of a predetermined CE level by the higher layer signaling (for example, the RRC signaling, the broadcast information), the downlink control information (DCI) or a combination thereof. For example, the information on the correspondence relationship between the SFN about the PRACH and the repetition number of the PRACH (and/or the CE level) and the sub-frame number at which the transmission of the PRACH is started, the preamble number of the PRACH or the frequency location to which the PRACH is assigned may be notified to the UE. The UE can use the notified information on the correspondence relationship to update the predetermined correspondence relationship.

(Radio communication system)

A configuration of a radio communication system according to an embodiment of the present invention will be described below. In the radio communication system, the radio communication methods according to the embodiments of the present invention described above are applied. Note that, the radio communication methods according to the embodiments of the present invention described above may be individually applied or a combination thereof may be applied. Although here, as the user terminal with the usage band limited to a narrow band, the MTC terminal is exemplified, it is not limited to the MTC terminal.

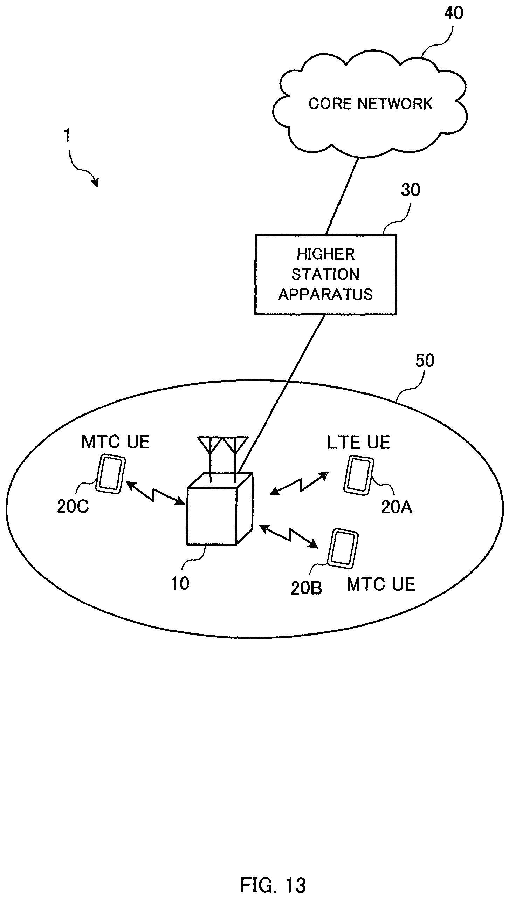

FIG. 13 is a schematic configuration diagram of the radio communication system according to the embodiment of the present invention. A radio communication system 1 shown in FIG. 13 is an example where an LTE system is adopted in the network domain of a machine communication system. In the radio communication system 1, a carrier aggregation (CA) and/or a dual connectivity (DC) can be applied in which a plurality of basic frequency blocks (component carriers) where the system bandwidth of the LTE system is one unit are integrally formed. Further, although the LTE system is assumed to be set to the system band of the maximum of 20 MHz both on downlink and on uplink, it is not limited to this configuration. Note that, the radio communication system 1 may be referred to as SUPER 3G, LTE-A (LTE-Advanced), IMT-Advanced, 4G (4th generation mobile communication system), 5G (5th generation mobile communication system), FRA (Future Radio Access) or the like.

The radio communication system 1 is configured to include a radio base station 10 and a plurality of user terminals 20A, 20B and 20C which is wirelessly connected to the radio base station 10. The radio base station 10 is connected to a higher station apparatus 30 and is connected to a core network 40 through the higher station apparatus 30. Note that, the higher station apparatus 30 includes, for example, an access gateway apparatus, a radio network controller (RNC) and a mobility management entity (MME) but is not limited thereto.

The user terminals 20A, 20B and 20C can communicate with the radio base station 10 in a cell 50. For example, the user terminal 20A is a user terminal (hereinafter, an LTE terminal) which supports LTE (Rel-10 or below) or LTE-Advanced (Rel-10 and beyond), the other user terminals 20B and 20C are MTC terminals which serve as communication devices in the machine communication system. Hereinafter, unless the user terminals 20A, 20B and 20C are particularly distinguished from each other, they are simply referred to as user terminals 20.

Note that, the MTC terminals 20B and 20C are terminals which support various types of communication schemes such as LTE and LTE-A, and may be not only fixed communication terminals such as an electric meter, a gas meter and a vending machine but also mobile communication terminals such as a vehicle. Further, the user terminal 20 may communicate with the other user terminals 20 directly or through the radio base station 10.

In the radio communication system 1, as radio access schemes, OFDMA (Orthogonal Frequency Division Multiple Access) is applied on downlink, and SC-FDMA (Single Carrier-Frequency Division Multiple Access) is applied on uplink. The OFDMA is a multicarrier transmission scheme for dividing a frequency band into a plurality of narrow frequency bands (subcarriers), and mapping data to each subcarrier to perform communication. The SC-FDMA is a single-carrier transmission scheme for dividing a system bandwidth into bands formed with a single resource block or contiguous resource blocks for each terminal and allowing a plurality of terminals to use mutually different bands and thus reducing interference among the terminals. Note that the uplink and downlink radio access schemes are not limited to these combinations.

In the radio communication system 1, as downlink channels, a downlink shared channel (PDSCH: Physical Downlink Shared Channel) shared by the respective user terminals 20, a broadcast channel (PBCH: Physical Broadcast Channel), a downlink L1/L2 control channel and the like are used. With the PDSCH, user data, higher layer control information and a predetermined SIB (System Information Block) are transmitted. Further, with the PBCH, a MIB (Master Information Block) is transmitted.

The downlink L1/L2 control channel includes a PDCCH (Physical Downlink Control Channel), an EPDCCH (Enhanced Physical Downlink Control Channel), a PCFICH (Physical Control Format Indicator Channel), a PHICH (Physical Hybrid-ARQ Indicator Channel), and the like. With the PDCCH, downlink control information (DCI) including the scheduling information of the PDSCH and the PUSCH and the like are transmitted. With the PCFICH, the number of OFDM symbols used for the PDCCH is transmitted. With the PHICH, acknowledgment information (ACK/NACK) of HARQ for the PUSCH is transmitted. The EPDCCH is frequency division multiplexed with the PDSCH, and used for the transmission of the DCI and the like as with the PDCCH.

In the radio communication system 1, as uplink channels, an uplink shared channel (PUSCH: Physical Uplink Shared Channel) shared by the respective user terminals 20, an uplink L1/L2 control channel (PUCCH: Physical Uplink Control Channel), a random access channel (PRACH: Physical Random Access Channel) and the like are used. The PUSCH may be referred to as an uplink data channel. With the PUSCH, the user data and the higher layer control information are transmitted. With the PUCCH, downlink radio quality information (CQI: Channel Quality Indicator), the acknowledgment information (ACK/NACK) and the like are transmitted. With the PRACH, a random access preamble for establishing connection with the cell is transmitted.

Note that, the channels for the MTC terminal may be represented by adding "M", and for example, the EPDCCH, the PDSCH, the PUCCH and the PUSCH for the MTC terminal may be respectively referred to as the MPDCCH, the MPDSCH, the MPUCCH and the MPUSCH.

In the radio communication system 1, as downlink reference signals, a cell-specific reference signal (CRS), a channel state information-reference signal (CSI-RS), a demodulation reference signal (DMRS) and the like are transmitted. Further, in the radio communication system 1, as uplink reference signals, a measurement reference signal (SRS: Sounding Reference Signal), the demodulation reference signal (DMRS) and the like are transmitted. Note that, the DMRS may be referred to as a UE-specific reference signal. Furthermore, reference signals to be transmitted are not limited to these signals.

(Radio base station)

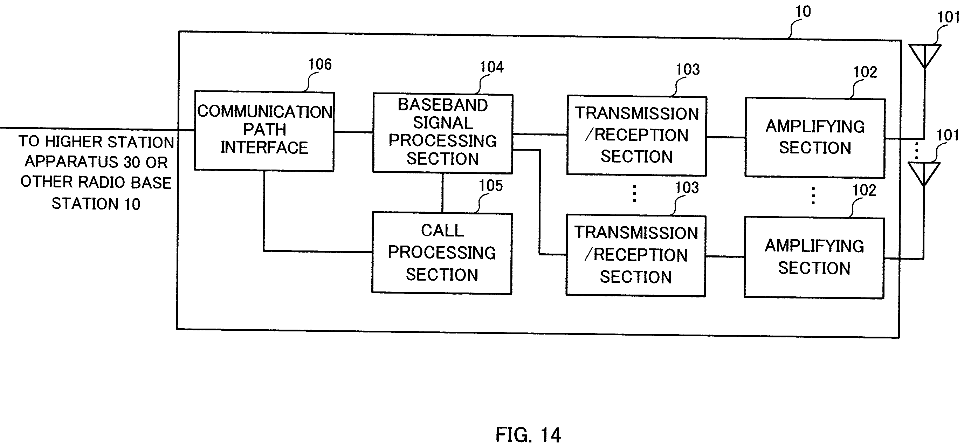

FIG. 14 is a diagram showing an example of the entire configuration of the radio base station according to the embodiment of the present invention. The radio base station 10 includes at least a plurality of transmission/reception antennas 101, amplifying sections 102, transmission/reception sections 103, a baseband signal processing section 104, a call processing section 105 and a communication path interface 106.

User data to be transmitted to the user terminal 20 from the radio base station 10 on downlink is input to the baseband signal processing section 104 from the higher station apparatus 30 through the communication path interface 106.

The baseband signal processing section 104 performs, on the user data, processing of a PDCP (Packet Data Convergence Protocol) layer, segmentation and concatenation of the user data, transmission processing of a RLC layer such as RLC (Radio Link Control) retransmission control, and transmission processing such as MAC (Medium Access Control) retransmission control (for example, transmission processing of HARQ (Hybrid Automatic Repeat Request)), scheduling, transmission format selection, channel coding, Inverse Fast Fourier Transform (IFFT) processing and precoding processing so as to transfer the user data to each of the transmission/reception sections 103. Furthermore, also on the downlink control signal, the baseband signal processing section 104 performs transmission processing such as channel coding and Inverse Fast Fourier Transform so as to transfer the downlink control signal to each of the transmission/reception sections 103.

Each of the transmission/reception sections 103 converts, into a radio frequency band, a baseband signal which is subjected to precoding for each antenna and which is output from the baseband signal processing section 104, and transmits it. The transmission/reception section 103 can be formed with a transmitter/receiver, a transmission/reception circuit or a transmission/reception device which is described based on common recognition in the technical field of the present invention. Note that the transmission/reception section 103 may be formed as an integral transmission/reception section or may be formed with a transmission section and a reception section.

The radio frequency signal which is frequency-converted in the transmission/reception section 103 is amplified with the amplifying section 102 and is transmitted from the transmission/reception antenna 101. The transmission/reception section 103 can transmit and receive various types of signals in a narrow bandwidth (for example, 1.4 MHz) which is limited by a system bandwidth (for example, one component carrier).

On the other hand, with respect to uplink signals, the radio frequency signals received by each of the transmission/reception antennas 101 are amplified with the amplifying sections 102, respectively. Each of the transmission/reception sections 103 receives the uplink signal amplified in the amplifying section 102. The transmission/reception section 103 frequency-converts the reception signal into a baseband signal, and outputs it to the baseband signal processing section 104.

The baseband signal processing section 104 performs, on the user data included in the input uplink signal, fast Fourier transform (FFT) processing, inverse discrete Fourier transform (IDFT) processing, error correcting decoding, the reception processing of MAC retransmission control and the reception processing of the RLC layer and the PDCP layer so as to transfer the user data to the higher station apparatus 30 through the communication path interface 106. The call processing section 105 performs call processing such as the setting and release of a communication channel, the state management of the radio base station 10 and the management of the radio resources.

The communication path interface 106 transmits and receives signals to and from the higher station apparatus 30 through a predetermined interface. Further, the communication path interface 106 may transmit and receive (backhaul signaling) signals to and from another radio base station 10 through an inter-base station interface (for example, an optical fiber in conformity with CPRI (Common Public Radio Interface), an X2 interface).

The transmission/reception section 103 repeatedly transmits, to the user terminal 20, the EPDCCH (MPDCCH) including the DCI for RAR corresponding to the PRACH. Further, the transmission/reception section 103 repeatedly receives the PRACH from the user terminal 20. Furthermore, the transmission/reception section 103 may transmit information on the CE level, information on the repetition level (or the repetition number), information on the initial location of the CSS to which the DCI for RAR can be assigned, and the like.

Further, the transmission/reception section 103 may transmit information on a correspondence relationship between the preamble number of the PRACH and the frequency location of the DCI for RAR corresponding to the PRACH. Furthermore, the transmission/reception section 103 may transmit information on the SFN about the PRACH and the repetition number of the PRACH (and/or the CE level) and the sub-frame number at which the transmission of the PRACH is started, the preamble number of the PRACH or the frequency location to which the PRACH is assigned.

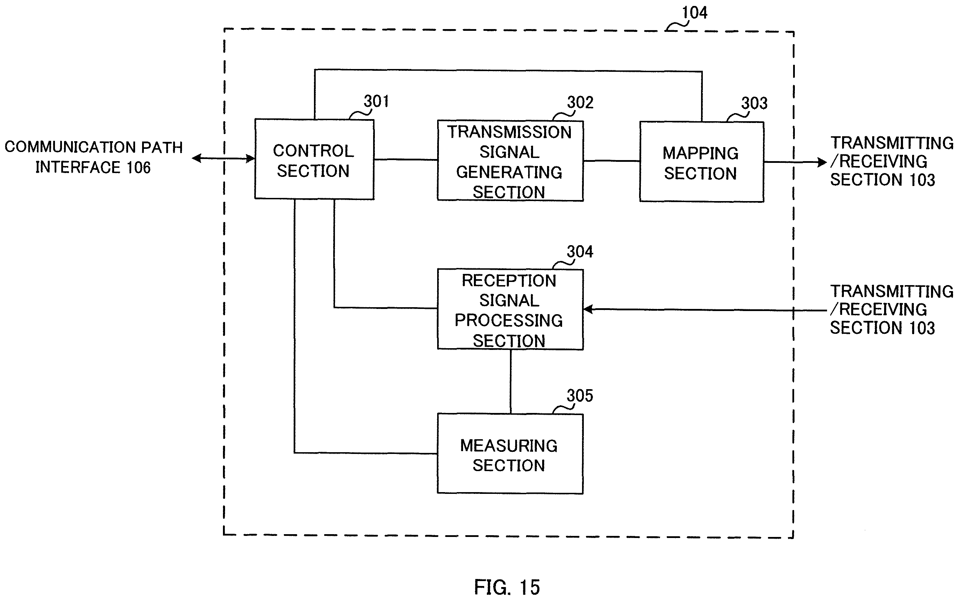

FIG. 15 is a diagram showing an example of the function configuration of the radio base station according to the embodiment of the present invention. Note that, FIG. 15 mainly shows the functional blocks of characteristic portions in the present embodiment, and the radio base station 10 is assumed to include the other functional blocks necessary for radio communication. As shown in FIG. 15, the baseband signal processing section 104 includes at least a control section (scheduler) 301, a transmission signal generating section (generation section) 302, a mapping section 303, a reception signal processing section 304 and a measuring section 305.

The control section (scheduler) 301 performs control on the entire radio base station 10. The control section 301 can be formed with a controller, a control circuit or a control device which is described based on common recognition in the technical field of the present invention.

The control section 301 controls, for example, the generation of a signal by the transmission signal generating section 302 and the assignment of a signal by the mapping section 303. Further, the control section 301 controls the reception processing on a signal by the reception signal processing section 304 and the measurement of a signal by the measuring section 305.

The control section 301 controls the scheduling (for example, resource assignment) of system information, a downlink data signal transmitted on the PDSCH and a downlink control signal transmitted on the PDCCH and/or the EPDCCH (MPDCCH). Further, the control section 301 controls the scheduling of synchronization signals (for example, PSS (Primary Synchronization Signal) / SSS (Secondary Synchronization Signal)) and downlink reference signals such as CRS, CSI-RS and DM-RS.

Furthermore, the control section 301 controls the scheduling of an uplink data signal transmitted on the PUSCH, an uplink control signal (for example, acknowledgment information (HARQ-ACK)) transmitted on the PUCCH and/or the PUSCH, a random access preamble transmitted on the PRACH, an uplink reference signal and the like.

The control section 301 controls the transmission signal generating section 302 and the mapping section 303 so as to assign various types of signals to a narrow band and to transmit them to the user terminal 20. The control section 301 performs control so as to transmit, for example, downlink broadcast information (MIB, SIB (MTC-SIB)), the EPDCCH, the PDSCH and the like in a narrow band.

Further, the control section 301 transmits the PDSCH in a predetermined narrow band to the user terminal 20.

Note that, when the coverage enhancement is applied to the radio base station 10, the control section 301 may set the repetition number of a DL signal to the predetermined user terminal 20 so as to repeatedly transmit the DL signal according to the repetition number. Furthermore, the control section 301 may also perform control to notify the user terminal 20 of the information on the repetition number by use of the control signal (DCI) of the EPDCCH, the higher layer signaling (for example, the RRC signaling, the broadcast information) and the like.

Moreover, the control section 301 controls, based on the SFN about the PRACH and the repetition number of the PRACH, the transmission signal generating section 302, the mapping section 303, the reception signal processing section 304 and the like on the transmission of the downlink control channel for the RAR corresponding to the PRACH and the reception of the PRACH. The control section 301 can perform control to repeatedly transmit the DCI for RAR on the MPDCCH and perform control to repeatedly receive the PRACH.

Specifically, the control section 301 may perform, based on the SFN about the PRACH and the repetition number of the PRACH, control so as to transmit the DCI for RAR with a radio resource that is a predetermined radio resource shifted in frequency (the method 1 of the first embodiment). Further, the control section 301 may perform, based on the SFN about the PRACH and the repetition number of the PRACH, control so as to scramble the DCI for RAR with a predetermined RA-RNTI (the method 2 of the first embodiment). Furthermore, the control section 301 may perform, based on the SFN about the PRACH and the repetition number of the PRACH, control so as to allocate the DCI for RAR to a predetermined ECCE (the method 3 of the first embodiment).

Further, the control section 301 may perform, based on the SFN about the PRACH and the repetition number of the PRACH, control so as to determine the sub-frame number at which the reception of the PRACH is stated (the method 1 of the second embodiment). Furthermore, the control section 301 may perform, based on the SFN about the PRACH and the repetition number of the PRACH, control so as to determine the preamble number of the PRACH (the method 2 of the second embodiment). Moreover, the control section 301 may perform, based on the SFN about the PRACH and the repetition number of the PRACH, control so as to determine the frequency location to which the PRACH is assigned (the method 3 of the second embodiment).

The control section 301 may perform, based on information on a correspondence relationship between the preamble number of the PRACH and the frequency location of the DCI for RAR corresponding to the PRACH, control so as to transmit the DCI for RAR with a predetermined frequency resource corresponding to the preamble number of the PRACH.

Further, the control section 301 may perform control so as to generate information on a correspondence relationship between the SFN about the PRACH and the repetition number of the PRACH (and/or the CE level) and the sub-frame number at which the transmission of the PRACH is started, the preamble number of the PRACH or the frequency location to which the PRACH is assigned and to notify the information to the user terminal 20.

The transmission signal generating section (generation section) 302 generates downlink signals (such as the downlink control signal, the downlink data signal and the downlink reference signal) based on an instruction from the control section 301, and outputs the downlink signals to the mapping section 303. The transmission signal generating section 302 can be formed with a signal generator, a signal generation circuit or a signal generation device which is described based on common recognition in the technical field of the present invention.

The transmission signal generating section 302 generates, for example, based on an instruction from the control section 301, a DL assignment which notifies downlink signal assignment information and a UL grant which notifies uplink signal assignment information. Further, on the downlink data signal, coding processing and modulation processing are performed according to a coding rate, a modulation scheme and the like determined based on channel state information (CSI) from each of the user terminals 20.

Furthermore, the transmission signal generating section 302 generates the same downlink signal over a plurality of sub-frames and outputs it to the mapping section 303 when downlink signal repetition transmission (for example, the repetition transmission of the EPDCCH or the PDSCH) is set.

The mapping section 303 maps, based on an instruction from the control section 301, the downlink signal generated in the transmission signal generating section 302 to a radio resource (for example, the maximum of 6 resource blocks) in a predetermined narrow band, and outputs it to the transmission/reception section 103. The mapping section 303 can be formed with a mapper, a mapping circuit or a mapping device which is described based on common recognition in the technical field of the present invention.

The reception signal processing section 304 performs reception processing (for example, demapping, demodulation or decoding) on the reception signal input from the transmission/reception section 103. Here, the reception signal is, for example, the uplink signal (such as the uplink control signal, the uplink data signal or the uplink reference signal) transmitted from the user terminal 20. The reception signal processing section 304 can be formed with a signal processor, a signal processing circuit or a signal processing device which is described based on common recognition in the technical field of the present invention.

The reception signal processing section 304 applies the reception processing for the repetition signal to the reception signal from the user terminal 20 which transmits the repetition signal. The reception signal processing section

**EP 3 337 273 A1**

304 outputs information decoded by the reception processing to the control section 301. Further, the reception signal processing section 304 outputs the reception signal and a signal after the reception processing to the measuring section 305.

The measuring section 305 performs a measurement on the received signal. The measuring section 305 can be formed with a measurement instrument, a measurement circuit or a measurement device which is described based on common recognition in the technical field of the present invention.

The measuring section 305 may measure the received power (for example, PSRP (Reference Signal Received Power)), the received quality (for example, RSRQ (Reference Signal Received Quality)), a channel state and the like. The results of the measurement may be output to the control section 301.

(User terminal)

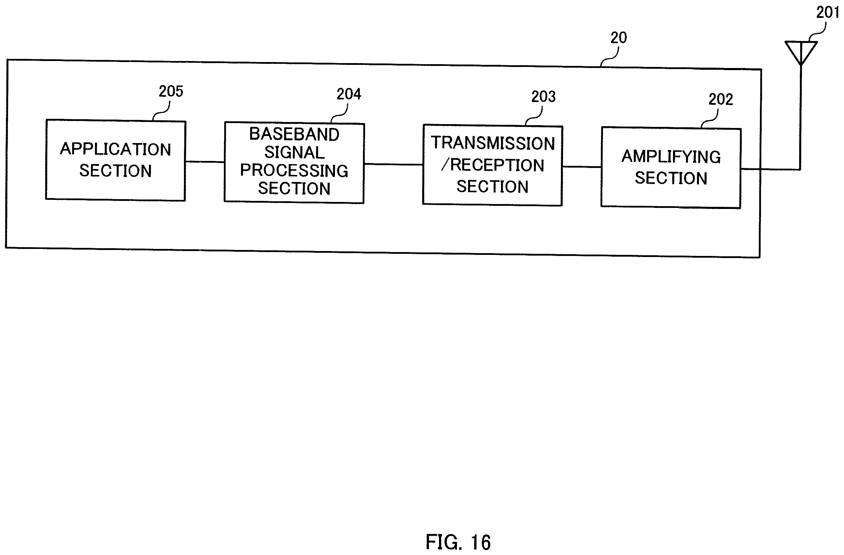

FIG. 16 is a diagram showing an example of the entire configuration of the user terminal according to the embodiment of the present invention. Note that, although detailed description is omitted here, a normal LTE terminal may be operated so as to serve as the MTC terminal. The user terminal 20 includes at least a transmission/reception antenna 201, an amplifying section 202, a transmission/reception section 203, a baseband signal processing section 204 and an application section 205. Further, the user terminal 20 may include a plurality of transmission/reception antennas 201, amplifying sections 202, transmission/reception sections 203 and the like.

The radio frequency signal received by the transmission/reception antenna 201 is amplified with the amplifying section 202. The transmission/reception section 203 receives the downlink signal amplified with the amplifying section 202.

The transmission/reception section 203 frequency-converts the reception signal into the baseband signal and outputs it to the baseband signal processing section 204. The transmission/reception section 203 can be formed with a transmitter/receiver, a transmission/reception circuit or a transmission/reception device which is described based on common recognition in the technical field of the present invention. Note that the transmission/reception section 203 may be formed as an integral transmission/reception section or may be formed with a transmission section and a reception section.

The baseband signal processing section 204 performs FFT processing, error correction decoding, the reception processing of retransmission control and the like on the input baseband signal. The downlink user data is transferred to the application section 205. The application section 205 performs, for example, processing on layers higher than a physical layer and a MAC layer. Further, the broadcast information of the downlink data is also transferred to the application section 205.

On the other hand, the uplink user data is input from the application section 205 to the baseband signal processing section 204. The baseband signal processing section 204 performs the transmission processing of retransmission control (for example, the transmission processing of HARQ), channel coding, precoding, discrete Fourier transform (DFT) processing, IFFT processing and the like, and transfers the uplink user data to the transmission/reception section 203.

The transmission/reception section 203 frequency-converts the baseband signal output from the baseband signal processing section 204 into a radio frequency band, and transmits it. The radio frequency signal which is frequency-converted in the transmission/reception section 203 is amplified with the amplifying section 202 and is transmitted from the transmission/reception antenna 201.

The transmission/reception section 203 repeatedly transmits the PRACH to the radio base station 10. Further, the transmission/reception section 203 repeatedly receives, from the radio base station 10, the EPDCCH (MPDCCH) including the DCI for RAR corresponding to the PRACH. Furthermore, the transmission/reception section 203 may receive the information on the CE level, the information on the repetition level (or the repetition number), the information on the initial location of the CSS to which the DCI for RAR can be assigned, or the like.

Further, the transmission/reception section 203 may receive the information on the correspondence relationship between the preamble number of the PRACH and the frequency location of the DCI for RAR corresponding to the PRACH. Furthermore, the transmission/reception section 203 may receive the information on the correspondence relationship between the SFN about the PRACH and the repetition number of the PRACH (and/or the CE level) and the sub-frame number at which the transmission of the PRACH is started, the preamble number of the PRACH or the frequency location to which the PRACH is assigned.

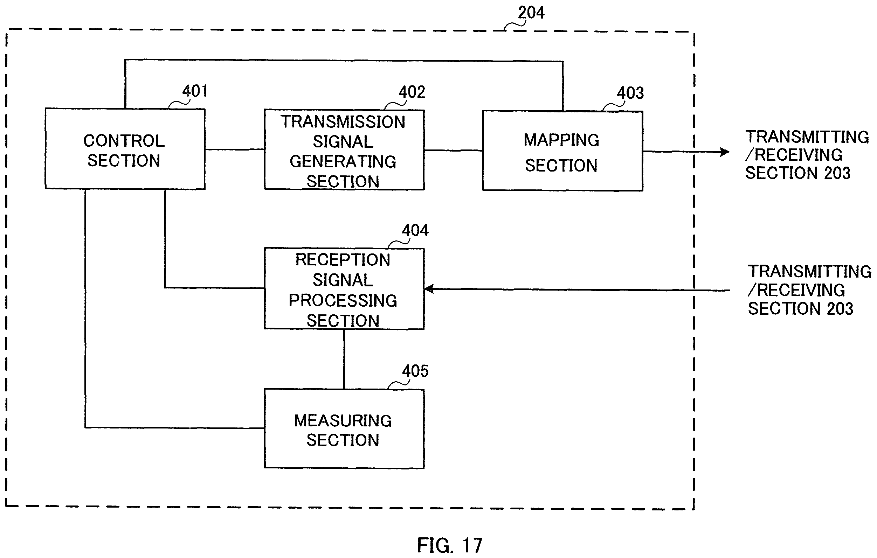

FIG. 17 is a diagram showing an example of the function configuration of the user terminal according to the embodiment of the present invention. Note that FIG. 17 mainly shows the functional blocks of characteristic portions in the present embodiment, and the user terminal 20 is assumed to include the other functional blocks necessary for radio communication. As shown in FIG. 17, the baseband signal processing section 204 included in the user terminal 20 includes at least a control section 401, a transmission signal generating section (generation section) 402, a mapping section 403, a reception signal processing section 404 and a measuring section 405.

The control section 401 controls the entire user terminal 20. The control section 401 can be formed with a

14

controller, a control circuit or a control device which is described based on common recognition in the technical field of the present invention.

The control section 401 controls, for example, the generation of a signal by the transmission signal generating section 402 and the assignment of a signal by the mapping section 403. Further, the control section 401 controls the reception processing on a signal by the reception signal processing section 404 and the measurement of a signal by the measuring section 405.

The control section 401 acquires, from the reception signal processing section 404, the downlink control signal (signal transmitted on the PDCCH/EPDCCH) transmitted from the radio base station 10 and the downlink data signal (signal transmitted on the PDSCH). The control section 401 controls, based on the downlink control signal, results of determination on whether or not it is necessary to perform retransmission control on the downlink data signal and the like, the generation of the uplink control signal (for example, the acknowledgment information (HARQ-ACK)) and the uplink data signal.

Further, when the repetition number of the uplink signal (for example, the PUCCH and/or the PUSCH) is set for the user terminal 20, the control section 401 can perform, based on information on the repetition level of a predetermined signal, control so as to repeatedly transmit a signal including the same information over a plurality of sub-frames.

When information indicating that an operation in a normal coverage mode or a coverage enhancement mode is performed is input from the reception signal processing section 404, the control section 401 can determine the mode of the own terminal based on the information described above. Further, the control section 401 may determine the mode based on the information on the repetition level.

Furthermore, the control section 401 controls, based on the SFN about the PRACH and the repetition number of the PRACH, the transmission signal generating section 402, the mapping section 403, the reception signal processing section 404 and the like on the reception of the downlink control channel for the RAR and the transmission of the PRACH. The control section 401 can perform control so as to repeatedly receive the DCI for RAR on the MPDCCH and perform control so as to repeatedly transmit the PRACH.

Specifically, the control section 401 may perform, based on the SFN about the PRACH and the repetition number of the PRACH, control so as to receive the DCI for RAR with a radio resource that is a predetermined radio resource shifted in frequency (the method 1 of the first embodiment). Further, the control section 401 may perform, based on the SFN about the PRACH and the repetition number of the PRACH, control so as to decode the DCI for RAR with a predetermined RA-RNTI (the method 2 of the first embodiment). Furthermore, the control section 401 may perform, based on the SFN about the PRACH and the repetition number of the PRACH, control so as to receive the DCI for RAR in a predetermined ECCE (the method 3 of the first embodiment).

Further, the control section 401 may perform, based on the SFN about the PRACH and the repetition number of the PRACH, control so as to determine the sub-frame number at which the reception of the PRACH is stated (the method 1 of the second embodiment). Furthermore, the control section 401 may perform, based on the SFN about the PRACH and the repetition number of the PRACH, control so as to determine the preamble number of the PRACH (the method 2 of the second embodiment). Moreover, the control section 401 may perform, based on the SFN about the PRACH and the repetition number of the PRACH, control so as to determine the frequency location to which the PRACH is assigned (the method 3 of the second embodiment).

The control section 401 may perform, based on the information on the correspondence relationship between the preamble number of the PRACH and the frequency location of the DCI for RAR corresponding to the PRACH, control so as to transmit the DCI for RAR with a predetermined frequency resource.

The transmission signal generating section 402 generates uplink signals (such as the uplink control signal, the uplink data signal and the uplink reference signal) based on an instruction from the control section 401, and outputs the uplink signals to the mapping section 403. The transmission signal generating section 402 can be formed with a signal generator, a signal generation circuit or a signal generation device which is described based on common recognition in the technical field of the present invention.

The transmission signal generating section 402 generates, for example, based on an instruction from the control section 401, the uplink control signal on the acknowledgment information (HARQ-ACK) and the channel state information (CSI). Further, the transmission signal generating section 402 generates the uplink data signal based on an instruction from the control section 401. For example, when the UL grant is included in the downlink control signal notified from the radio base station 10, the transmission signal generating section 402 is instructed from the control section 401 to generate the uplink data signal.

Moreover, when the repetition transmission of a predetermined uplink signal is set for the user terminal 20, the transmission signal generating section 402 generates the same uplink signal over a plurality of sub-frames and outputs it to the mapping section 403. The repetition number may be set based on an instruction from the control section 401.

The mapping section 403 maps, based on an instruction from the control section 401, the uplink signal generated in the transmission signal generating section 402 to a radio resource (for example, the maximum of 6 resource blocks), and outputs it to the transmission/reception section 203. The mapping section 403 can be formed with a mapper, a mapping circuit or a mapping device which is described based on common recognition in the technical field of the present invention.

The reception signal processing section 404 performs reception processing (for example, demapping, demodulation or decoding) on the reception signal input from the transmission/reception section 203. Here, the reception signal is, for example, the downlink signal (such as the downlink control signal, the downlink data signal or the downlink reference signal) transmitted from the radio base station 10. The reception signal processing section 404 can be formed with a signal processor, a signal processing circuit or a signal processing device which is described based on common recognition in the technical field of the present invention.

The reception signal processing section 404 applies the reception processing for the repetition signal to the reception signal from the radio base station 10 which transmits the repetition signal. For example, the reception signal processing section 404 may perform, based on an instruction from the control section 401, decoding processing on the DCI (EPDCCH) with a predetermined identifier.

The reception signal processing section 404 outputs the information decoded by the reception processing to the control section 401. The reception signal processing section 404 outputs, for example, the broadcast information, the system information, the RRC signaling and the DCI to the control section 401. Further, the reception signal processing section 404 outputs the reception signal and a signal after the reception processing to the measuring section 405.

The measuring section 405 performs a measurement on the received signal. The measuring section 405 can be formed with a measurement instrument, a measurement circuit or a measurement device which is described based on common recognition in the technical field of the present invention.

The measuring section 405 may measure, for example, the received power of received signal (for example, the RSRP), the reception quality (for example, the RSRQ)), the channel state and the like. The results of the measurement may be output to the control section 401.

Note that, the block diagrams used in the description of the above embodiments indicate the blocks of functional units. These functional blocks (configuration sections) are realized by an arbitrary combination of hardware and software. There is no particular limitation to sections that realize the functional blocks. In other words, each of the functional blocks may be realized with one device which is physically combined or may be realized by connecting, with a wire or wirelessly, two or more devices which are physically separated and using these devices.

For example, part or the whole of each of the functions of the radio base station 10 or the user terminal 20 may be realized by use of hardware such as an ASIC (Application Specific Integrated Circuit), a PLD (Programmable Logic Device) or a FPGA (Field Programmable Gate Array). Further, the radio base station 10 or the user terminal 20 may be realized with a computer device which includes a processor (CPU: Central Processing Unit), a communication interface for network connection, a memory and a computer-readable storage medium that holds programs. In other words, the radio base station, the user terminal and the like according to an embodiment of the present invention may function as a computer for performing the processing of the radio communication method according to the present invention.

Here, the processor, the memory and the like are connected with a bus for communicating information. Further, the computer-readable storage medium is a storage medium such as a flexible disc, a magneto-optical disc, a ROM (Read Only Memory), an EPROM (Erasable Programmable ROM), a CD-ROM (Compact Disc-ROM), a RAM (Random Access Memory) or a hard disc. Furthermore, the programs may be transmitted through an electrical communication line. Moreover, the radio base station 10 or the user terminal 20 may include an input device such an input key and an output device such as a display.

The function configurations of the radio base station 10 and the user terminal 20 may be realized with the hardware described above, a software module which is performed by the processor or a combination thereof. The processor operates an operating system to control the entire user terminal. In addition, the processor reads, from the storage medium, the programs, the software module and date on the memory and performs various types of processing according to them.

Here, the programs are preferably programs which make a computer perform the operations described in the respective embodiments discussed above. For example, the control section 401 of the user terminal 20 may be realized with a control program which is stored in the memory and which is operated with the processor, and the other functional blocks may likewise be realized.

Further, software, commands and the like may be transmitted and received through a transmission medium. For example, when software is transmitted from a website, a server or another remote source by use of a wired technology such as a coaxial cable, an optical fiber cable, a twisted pair and a digital subscriber line (DSL) and/or a wireless technology such as infrared rays, radio waves and microwaves, the wired technology and/or the wireless technology are included in the definition of the transmission medium.

Note that the terms described in the Description and/or the terms necessary for understanding the Description may be replaced with terms which have the same or similar meanings. For example, the channel and/or the symbol may be the signal (signaling). Further, the signal may be the message. Furthermore, the component carrier (CC) may be referred to as the carrier frequency, the cell or the like.

In addition, the information, the parameters and the like described in the Description may be indicated by the absolute values thereof, may be indicated by relative values with respect to a predetermined value or may be indicated by other pieces of information corresponding thereto. For example, the radio resource may be one which is indicated by an index.

The information, the signals and the like described in the Description may be indicated by use of any one of various different technologies. For example, the data, the commands, the information, the signals, the bits, the symbols, the chips and the like which can be mentioned over the above entire description may be indicated by voltages, currents, electromagnetic waves, magnetic fields or magnetic particles, optical fields or photons or arbitrary combinations thereof.

The respect aspects/embodiments described in the Description may be used singly, may be used by being combined or may be used by being switched when performed. Moreover, the notification of predetermined information (for example, the notification of "to be X") is not limited to an explicit notification and may be performed implicitly (for example, by failing to notify the predetermined information).

The notification of information is not limited to the aspects/embodiments described in the Description and may be performed by another method. For example, the notification of information may be performed by physical layer signaling (for example, DCI (Downlink Control Information), UCI (Uplink Control Information)), higher layer signaling (for example, RRC (Radio Resource Control) signaling, MAC (Medium Access Control) signaling, broadcast information (MIB (Master Information Block), SIB (System Information Block)), another signal or a combination thereof. Moreover, the RRC signaling may be referred to as a RRC message, and may be, for example, a RRC connection setup message or a RRC connection reconfiguration message.

The respective aspects/embodiments described in the Description may be applied to LTE (Long Term Evolution), LTE-A (LTE-Advanced), SUPER 3G, IMT-Advanced, 4G, 5G, FRA (Future Radio Access), CDMA2000, UMB (Ultra Mobile Broadband), IEEE 802.11 (Wi-Fi), IEEE 802.16 (WiMAX), IEEE 802.20, UWB (Ultra-WideBand), Bluetooth (registered trademark), a system which utilizes another appropriate system and/or the next-generation system which is enhanced based on these.

The order of the processing procedures, the sequences, the flowcharts and the like in the respective aspects/embodiments described in the Description may be replaced unless otherwise a contradiction arises. For example, in the methods described in the Description, the elements in various steps are provided in an illustrative order, and there is no limitation to the specific order provided.

The present invention is described above in details but it is obvious to a person skilled in the art that the present invention is not limited to the embodiments described in the Description. The present invention can be modified and practiced as variations without departing from the spirit and the scope of the present invention defined by the scope of claims. Hence, the descriptions of the Description are intended for illustrative explanation and are not intended to have any restrictive meaning for the present invention.

The present application is based on Japanese Patent Application No. 2015-159946 filed on August 13, 2015, the entire content of which is incorporated by reference herein.

**Claims**

1. A user terminal with a usage band limited to a narrow band that is a part of a system band, comprising:

   a transmission section that repeatedly transmits a PRACH (Physical Random Access Channel);
   a reception section that repeatedly receives a downlink control channel for RAR (Random Access Response) corresponding to the PRACH; and
   a control section that controls reception of the downlink control channel for RAR and/or transmission of the PRACH, based on a system frame number (SFN) about the PRACH and a repetition number of the PRACH.

2. The user terminal according to claim 1, wherein the control section determines that a radio resource for receiving the downlink control channel for RAR is a radio resource that is a predetermined radio resource shifted in frequency, based on the SFN about the PRACH and the repetition number of the PRACH.

3. The user terminal according to claim 1 or 2, wherein the control section determines an identifier used for reception of the downlink control channel for RAR, based on the SFN about the PRACH and the repetition number of the PRACH.

4. The user terminal according to any of claims 1 to 3, wherein the control section determines an enhanced control channel element used for reception of the downlink control channel for RAR, based on the SFN about the PRACH and the repetition number of the PRACH.

5. The user terminal according to claim 1, wherein the control section determines a sub-frame number for starting transmission of the PRACH, based on the SFN about the PRACH and the repetition number of the PRACH.

6. The user terminal according to claim 1 or 5, wherein the control section determines a preamble number of the PRACH, based on the SFN about the PRACH and the repetition number of the PRACH.

7. The user terminal according to any of claim 1, 5 or 6, wherein the control section determines a frequency location to which the PRACH is assigned, based on the SFN about the PRACH and the repetition number of the PRACH.

8. A radio base station that communicates with a user terminal with a usage band limited to a narrow band that is a part of a system band, comprising:

   a reception section that repeatedly receives a PRACH (Physical Random Access Channel);
   a transmission section that repeatedly transmits a downlink control channel for RAR (Random Access Response) corresponding to the PRACH; and
   a control section that controls transmission of the downlink control channel for RAR and/or reception of the PRACH, based on a system frame number (SFN) about the PRACH and a repetition number of the PRACH.

9. A radio communication method in a user terminal with a usage band limited to a narrow band that is a part of a system band, comprising:

   repeatedly transmitting a PRACH (Physical Random Access Channel);
   repeatedly receiving a downlink control channel for RAR (Random Access Response) corresponding to the PRACH; and
   controlling reception of the downlink control channel for RAR and/or transmission of the PRACH, based on a system frame number (SFN) about the PRACH and a repetition number of the PRACH.

10. A radio communication system that includes a user terminal with a usage band limited to a narrow band that is a part of a system band, the user terminal including:

   a transmission section that repeatedly transmits a PRACH (Physical Random Access Channel);
   a reception section that repeatedly receives a downlink control channel for RAR (Random Access Response) corresponding to the PRACH; and
   a control section that controls reception of the downlink control channel for RAR and/or transmission of the PRACH, based on a system frame number (SFN) about the PRACH and a repetition number of the PRACH.

FIG. 1

EP 3 337 273 A1

FIG. 2

| SFN=1 | SFN=2 | SFN=3 | SFN=4 | SFN=5 | SFN=6 | SFN=7 | SFN=8 | SFN=9 | SFN=10 |
|-------|-------|-------|-------|-------|-------|-------|-------|-------|--------|

RAR for UE1

RAR window

UE1, sf = 5, preamble = 15 (Rep. = 20)

False detection of RAR
→ Unnecessary Msg. 3 and 4.

RAR window

UE2, sf = 5, preamble = 15 (Rep. = 20)

RAR window

UE3, sf = 5, preamble = 15 (Rep. = 20)

FIG. 3

Time

EP 3 337 273 A1

FIG. 4

RAR window

Freq.

CSS for UE1-3

Time

FIG. 5

RAR window

Freq.

Predefined/
configured 6PRB

CSS for UE1

CSS for UE2

CSS for UE3

Time

FIG. 6

SUB-FRAME NUMBER

| SFN i-1 | SFN i | SFN i+1 |

| 0 | 1 | 2 | 3 | 4 | 5 | 6 | 7 | 8 | 9 | 0 | 1 | 2 | 3 | 4 | 5 | 6 | 7 | 8 | 9 | 0 | 1 | 2 | 3 | 4 | 5 | 6 | 7 | 8 | 9 |

CE level

CE level = 1
(e.g., Rep. = 30)

CE level = 2
(e.g., Rep. = 20)

CE level = 3
(e.g., Rep. = 10)

FIG. 7

EP 3 337 273 A1

| SFN=1 | SFN=2 | SFN=3 | SFN=4 | SFN=5 | SFN=6 | SFN=7 | SFN=8 | SFN=9 | SFN=10 |

(sf = 1)

(sf = 3)

(sf = 5)

CE level = 1
(e.g., Rep. = 30)

(sf = 7 or 9)  (sf = 1 or 5)  (sf = 7 or 9)

CE level = 2
(e.g., Rep. = 20)

FIG. 8

Time

SUB-FRAME NUMBER

| | SFN i-1 | | | | | | | | | | SFN i | | | | | | | | | | SFN i+1 | | | | | | | | | |
|---|---|---|---|---|---|---|---|---|---|---|---|---|---|---|---|---|---|---|---|---|---|---|---|---|---|---|---|---|---|---|

| 0 | 1 | 2 | 3 | 4 | 5 | 6 | 7 | 8 | 9 | 0 | 1 | 2 | 3 | 4 | 5 | 6 | 7 | 8 | 9 | 0 | 1 | 2 | 3 | 4 | 5 | 6 | 7 | 8 | 9 |

CE level = 1 (e.g., Rep. = 30)

CE level = 2 (e.g., Rep. = 20)

CE level = 3 (e.g., Rep. = 10)

FIG. 9

| SFN=1 | SFN=2 | SFN=3 | SFN=4 | SFN=5 | SFN=6 | SFN=7 | SFN=8 | SFN=9 | SFN=10 |

(sf = 3, preamble 0-21)

**CE level = 1**
**(e.g., Rep. = 30)**

(sf = 3, preamble 22-43)

(sf = 3, preamble 44-63)

(sf = 1, preamble 44-63)  (sf = 1, preamble 0-21)  (sf = 1, preamble 22-43)

**CE level = 3**
**(e.g., Rep. = 10)**

FIG. 10

Time

FIG. 11

| SFN=1 | SFN=2 | SFN=3 | SFN=4 | SFN=5 | SFN=6 | SFN=7 | SFN=8 | SFN=9 | SFN=10 |
|---|---|---|---|---|---|---|---|---|---|

(FL1)

(FL2)

(FL3)

CE level = 1
(e.g., Rep. = 30)

(FL3)    (FL1)    (FL2)

CE level = 3
(e.g., Rep. = 10)

FIG. 12

Time

FIG. 13

```
                                                              10            101

        106         104          103          102

    COMMUNICATION   BASEBAND    TRANSMISSION  AMPLIFYING        101
       PATH         SIGNAL      /RECEPTION     SECTION
TO HIGHER STATION INTERFACE    PROCESSING      SECTION
APPARATUS 30 OR               SECTION
OTHER RADIO BASE                          105        103          102
   STATION 10
                              CALL         TRANSMISSION  AMPLIFYING
                            PROCESSING     /RECEPTION     SECTION
                             SECTION        SECTION
```

FIG. 14

FIG. 15

EP 3 337 273 A1

FIG. 16

20

201

202 — AMPLIFYING SECTION

203 — TRANSMISSION /RECEPTION SECTION

204 — BASEBAND SIGNAL PROCESSING SECTION

205 — APPLICATION SECTION

204

401 CONTROL SECTION

402 TRANSMISSION SIGNAL GENERATING SECTION

403 MAPPING SECTION

TRANSMITTING /RECEIVING SECTION 203

404 RECEPTION SIGNAL PROCESSING SECTION

TRANSMITTING /RECEIVING SECTION 203

405 MEASURING SECTION

FIG. 17

## INTERNATIONAL SEARCH REPORT

| International application No. |
| --- |
| PCT/JP2016/073593 |

A. CLASSIFICATION OF SUBJECT MATTER
*H04W74/08*(2009.01)i, *H04W72/04*(2009.01)i

According to International Patent Classification (IPC) or to both national classification and IPC

B. FIELDS SEARCHED

Minimum documentation searched (classification system followed by classification symbols)
H04W4/00-99/00, H04B7/24-7/26

Documentation searched other than minimum documentation to the extent that such documents are included in the fields searched
Jitsuyo Shinan Koho        1922-1996   Jitsuyo Shinan Toroku Koho   1996-2016
Kokai Jitsuyo Shinan Koho   1971-2016   Toroku Jitsuyo Shinan Koho   1994-2016

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
| --- | --- | --- |
| A | NTT DOCOMO, PRACH repetition in Rel-13 low complexity UE, 3GPP TSG-RAN WG1#81 R1-153326, 2015.05.25, chapter 2 | 1-10 |
| A | Ericsson, PRACH resource allocation for MTC, 3GPP TSG-RAN WG1#81 R1-152508, 2015.05.25, passage 2.2 | 1-10 |
| A | Samsung, RA Preamble Transmission for Rel-13 Low Cost Ues, 3GPP TSG-RAN WG1#80b R1-151596, 2015.04.20, chapters 1, 2 | 1-10 |
| A | NTT DOCOMO, Views on Random Access Procedure in Rel-13 Low Complexity MTC, 3GPP TSG-RAN WG1#80 R1-150534, 2015.02.09, chapter 2 | 1-10 |

☒ Further documents are listed in the continuation of Box C.          ☐ See patent family annex.

| | | | |
| --- | --- | --- | --- |
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| 25 October 2016 (25.10.16) | 08 November 2016 (08.11.16) |

| Name and mailing address of the ISA/ | Authorized officer |
| --- | --- |
| Japan Patent Office 3-4-3,Kasumigaseki,Chiyoda-ku, Tokyo 100-8915,Japan | Telephone No. |

Form PCT/ISA/210 (second sheet) (January 2015)

**INTERNATIONAL SEARCH REPORT**

International application No.

PCT/JP2016/073593

C (Continuation).    DOCUMENTS CONSIDERED TO BE RELEVANT

| Category* | Citation of document, with indication, where appropriate, of the relevant passages | Relevant to claim No. |
|---|---|---|
| P,X | NTT DOCOMO, Discussion on scheduling of RAR, 3GPP TSG-RAN WG1#83 R1-157349, 2015.11.15, chapter 2 | 1-10 |

Form PCT/ISA/210 (continuation of second sheet) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

• JP 2015159946 A